# EUROPEAN PATENT APPLICATION

(11) **EP 1 770 531 A1**
(43) Date of publication of application: **04.04.2007**
(21) Application number: 05739267.2
(22) Date of filing: 12.05.2005
(51) Int. Cl.: G06F 12/14, G06F 1/00, G06F 9/48, H04M 11/08

(54) **CONTENT REPRODUCTION CONTROL METHOD**

(30) Priority: 13.05.2004 JP 2004143536; 28.04.2005 JP 2005130918
(71) Applicant: NEC CORPORATION, Minato-ku, Tokyo 108-8001 (JP)
(72) Inventor: NINO, Yuichi, c/o NEC Corporation, Tokyo; 1088001 (JP)
(74) Representative: Glawe, Delfs, Moll
(86) International application number: PCT/JP2005/008705
(87) International publication number: WO 2005/111810

(57) **Abstract**

When a process (interrupt process) causing no problem in the content copyright management but to be executed with a higher priority than a content reproduction such as a telephone call or alarm display is started or ended during a content reproduction/execution, process judgment means (308) reports it to control means (305). The control means (305) outputs a reproduction interrupt instruction for temporarily stopping the use time measurement and interrupting the content reproduction to reproduction/execution means (304) and outputs a reproduction resume instruction for resuming the use time measurement and resuming the content reproduction to the reproduction/execution means (304) in accordance with the end report of process judgment means (308).

## Description

### [APPLICABLE FIELD IN THE INDUSTRY]

The present invention relates to a content consumption control method, system, terminal and program, and a permission information distribution server and program,for a mobile telephone terminal, and more particularly to a content consumption control method, system, terminal and program, and a permission information distribution server and program that enable a limit to the use such as the use number of times and a usage time of a content to be set.

### [BACKGROUND ART]

With a rapid improvement in a technology of the mobile telephone terminal in recent years, a purpose of using the mobile telephone terminal is not confined to making a call, but has spread in a field such as viewing the content. However, the mobile telephone terminal, of which a function as a telephone is given a top priority, and yet, which has a smaller screen and a fewer number of input interfaces as compared with that of a PC (personal computer), is characterized in that it is difficult for a user to simultaneously perform two operations with the mobile telephone terminal. Accordingly, occurrence of an interrupt accompanied by an arrival of an incoming telephone call or the like while the user views the content necessitates a function of automatically interrupting the content viewing.

As a method of realizing such a function, the method has been proposed of interrupting the viewing of the content due to the interrupt such as an arrival of an incoming call and E-mail, or the like to resume the viewing of the content after the interrupt is ended (for example, see Patent document 1).

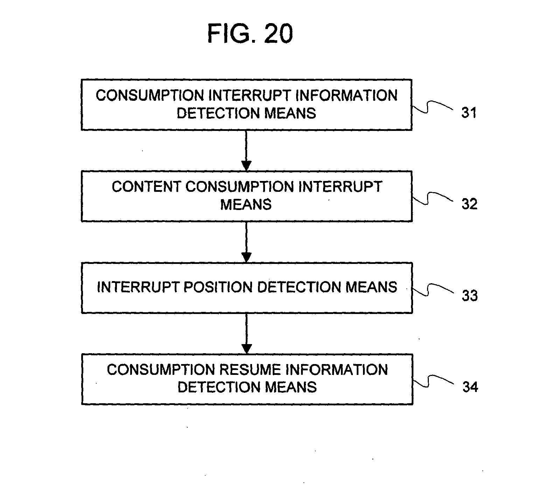

Fig. 20 is an explanatory view for explaining one example of the conventional method of resuming the interrupt of the content consumption. In accordance with an example shown in Fig. 20, the mobile telephone terminal for realizing the conventional method of resuming the interrupt of the content consumption includes consumption interrupt information detection means 31 for detecting and outputting consumption interrupt information (for example, a notification of an arrival of the incoming call transmitted during the content consumption, a notification of an arrival of the E-mail, a decline in an electric power of a battery that has occurred during the content consumption, or the like), being information for interrupting the consumption of the content, content consumption interrupt means 32 for interrupting the consumption of the content responding to the consumption interrupt information output by the consumption interrupt information detection means 31, interrupt position detection means 33 for detecting an interrupt position of the content, and consumption resume information detection means 34 for detecting consumption resume information, being information for resuming the consumption of the content. When the consumption resume information detection means 34 detects the consumption resume information, it , instructs consumption means (not shown in the figure) to reproduce the content at the vicinity of the interrupt position of the content.

Patent document 1: JP-P2002-77458A (paragraph 0012 to 0033, Fig. 1)

### [DISCLOSURE OF THE INVENTION]

### [PROBLEMS TO BE SOLVED BY THE INVENTION]

However, in the method described in the Patent document 1, an application to the content distributed with a limit to the usage time and the use number of times affixed, for example, the content for a trial use is not taken into consideration. Further, as the mobile telephone terminal becomes adapted to have an open system/a high functionality, it follows that the user simultaneously can execute various processes during the content consumption; however, in the method described in the Patent document 1, it is not taken into consideration to prevent an unauthorized process (process causing the problem in a copyright, for example, the process that allows the content to be output to an external memory) from being started in using the content.

Thereupon, a first object of the present invention is to provide a content consumption control method, system, terminal and program, and a permission information distribution server and program for a mobile telephone terminal that make it possible to interrupt and resume the consumption of the content as well distributed with a limit to the usage time and the use number of times affixed by preserving a content amount used so far at the time of interrupting the content consumption, detecting the content metered amount at the time of resuming the content consumption, and appropriately resuming the content use responding to the details of a use control.

Further, a second object of the present invention is to provide a content consumption control method, system, terminal and program, and a permission information distribution server and program that prevent the user from executing the process causing the problem in the copyright at the time of reproducing the content.

### [MEANS TO SOLVE THE PROBLEM]

The content consumption control method in accordance with the present invention is characterized in: measuring a metered amount of a content; storing a list of interrupt processes, being processes that are executed with a higher priority than a consumption of the content; determining whether or not the process that is going to be started during the consumption of the content is the interrupt process; when it is determined that the process that is going to be started is the interrupt process, storing the amount of the content used so far, and interrupting the consumption of the content till an execution of the interrupt process is ended; when the execution of the interrupt process is ended, detecting the stored metered amount of the content; and resuming the consumption of the content responding to the detected metered amount of the content.

A consumption time of the content may be measured as a measurement of the metered amount of the content, the measurement of the consumption time of the content may be stopped when it is determined that the process that is going to be started is the interrupt process, and the measurement of the consumption time of the content may be resumed when the execution of the interrupt process is ended. Such a method makes it possible to accurately measure the metered amount of the content.

The content consumption control method in accordance with the present invention is characterized in that: a distribution side distributes permission information, being information including a list of interrupt processes, being processes that are executed with a higher priority than a consumption of a content; and a reception side: makes a reference to the received permission information, thereby to determine whether or not the process that is going to be started during the consumption of the content is the interrupt process; and interrupts the consumption of the content till an execution of the interrupt process is ended when it is determined that the process that is going to be started is the interrupt process.

The distribution side may distribute permission information including information for limiting a consumption time of the content and may measure the consumption time of the content, and the reception side may stop the measurement of the consumption time of the content when it is determined that the process that is going to be started is the interrupt process, and may resume the measurement of the consumption time of the content when the execution of the interrupt process is ended. Such a method makes it possible to accurately measure the metered amount of the content.

The content consumption control method in accordance with the present invention is characterized in: storing a list of unauthorized processes, being processes that might cause unauthorized copying of a content, or tampering of a content, and a list of interrupt processes, being processes that are executed with a higher priority than a consumption of the content; determining whether the process that is going to be started during the consumption of the content is the unauthorized process, the interrupt process, or a process other than the unauthorized process and the interrupt process; when it is determined that the process that is going to be started is the interrupt process, interrupting the consumption of the content till an execution of the interrupt process is ended; and when it is determined that the process that is going to be started is the unauthorized process, suppressing a start of its process.

The content consumption control method in accordance with the present invention is characterized in: storing a list of unauthorized processes, being processes that might cause unauthorized copying of a content, or tampering of a content, a list of interrupt processes, being processes that are executed with a higher priority than a consumption of the content, and data of the content for consumption; determining whether the process that is going to be started during the consumption of the content is the unauthorized process, the interrupt process, or a process other than the unauthorized process and the interrupt process; when it is determined that the process that is going to be started is the interrupt process, interrupting the consumption of the content till an execution of the interrupt process is ended; and when it is determined that the process that is going to be started is the unauthorized process, deleting data of the content for consumption.

When a distribution side distributes the content with a consumption time of the content limited, the consumption time of the content may be measured, a measurement of the consumption time of the content may be stopped when the interrupt process is started, and the measurement of the consumption time of the content may be resumed when the execution of the interrupt process is ended. Such a method makes it possible to accurately measure the metered amount of the content.

The content consumption control method in accordance with the present invention is characterized in that: a distribution side distributes permission information, being information including a list of unauthorized processes, being processes that might cause unauthorized copying of a content, or tampering of a content, and a list of interrupt processes, being processes that are executed with a higher priority than a consumption of the content; and a reception side: stores the received permission information; makes a reference to the stored permission information, thereby to determine whether the process that is going to be started during the consumption of the content is the unauthorized process, the interrupt process, or a process other than the unauthorized process and the interrupt process; interrupts the consumption of the content till an execution of the interrupt process is ended when it is determined that the process that is going to be started is the interrupt process; and when it is determined that the process that is going to be started is the unauthorized process, suppresses a start of its process.

The content consumption control method in accordance with the present invention is characterized in that: a distribution side distributes permission information, being information including a list of unauthorized processes, being processes that might cause unauthorized copying of a content, or tampering of a content, and a list of interrupt processes, being processes that are executed with a higher priority than a consumption of the content; and a reception side: stores the received permission information; non-encrypts and stores an encrypted content responding to the permission information; makes a reference to the stored permission information, thereby to determine whether the process that is going to be started during the consumption of the content is the unauthorized process, the interrupt process, or a process other than the unauthorized process and the interrupt process; interrupts the consumption of the content till an execution of the interrupt process is ended when it is determined that the process that is going to be started is the interrupt process; and forcibly ends the consumption of the content to delete data of the non-encrypted content when it is determined that the process that is going to be started is the unauthorized process.

When the distribution side distributes the encrypted content with a consumption time of the content limited, the consumption time of the content may be measured, a measurement of the consumption time of the content may be stopped when the interrupt process is started, and the measurement of the consumption time of the content may be resumed when the execution of the interrupt process is ended. Such a method makes it possible to accurately measure the metered amount of the content.

The content consumption terminal in accordance with the present invention is characterized in including: storage section for storing a list of interrupt processes, being processes that are executed with a higher priority than a consumption of a content, and an amount of the content used so far; process determination means for determining whether or not the process that is going to be started during the consumption of the content is the interrupt process; consumption/execution means for, when the process determination means determines that the process that is going to be started is the interrupt process, interrupting the consumption of the content till an execution of the interrupt process is ended; and control means for, when the execution of the interrupt process is ended, detecting the metered amount of the content stored by the storage section, thereby to cause the consumption/execution means to resume the consumption of the content responding to the detected metered amount of the content.

The content consumption terminal may include communication means for receiving the content, and when a distribution side distributes the content with a consumption time of the content limited, the control means may measure the consumption time of the content, may stop a measurement of the consumption time of the content when the interrupt process is started, and may resume the measurement of the consumption time of the content when the execution of the interrupt process is ended. Such a configuration makes it possible to accurately measure the metered amount of the content.

The content consumption control system in accordance with the present invention, which is a content consumption control system having a content consumption terminal for reproducing a content, and a permission information distribution server for distributing permission information, being information indicating a condition in which the content consumption terminal reproduces the content, to the content consumption terminal via a communication line, is characterized in that: the permission information distribution server includes permission information distribution means for distributing permission information including a list of interrupt processes, being processes that are executed with a higher priority than a consumption of the content, to the content consumption terminal; and the content consumption terminal includes: process determination means for making a reference to the received permission information, thereby to determine whether or not the process that is going to be started during the consumption of the content is the interrupt process; and consumption/execution means for, when the process determination means determines that the process that is going to be started is the interrupt process, interrupting the consumption of the content till an execution of the interrupt process is ended.

The permission information distribution server may distribute permission information including information for limiting a consumption time of the content, and the content consumption terminal may include control means for measuring the consumption time of the content, stopping a measurement of the consumption time of the content when the interrupt process is started, and resuming the measurement of the consumption time of the content when the execution of the interrupt process is ended. Such a configuration makes it possible to accurately measure the metered amount of the content.

The content consumption terminal in accordance with the present invention is characterized in including: communication means for receiving a list of interrupt processes, being processes that are executed with a higher priority than a consumption of a content, from a distribution side; permission storage means for storing a list of the interrupt processes received by the communication means; process determination means for making a reference to a list of the interrupt processes stored by the permission storage means, thereby to determine whether or not the process that is going to be started during the consumption of the content is the interrupt process; and consumption/execution means for, when the process determination means determines that the process that is going to be started is the interrupt process, interrupting the consumption of the content till an execution of the interrupt process is ended.

The content consumption terminal may include control means for measuring a consumption time of the content, and when a distribution side distributes the content with the consumption time of the content limited, the control means may stop a measurement of the consumption time of the content when the interrupt process is started, and may resume the measurement of the consumption time of the content when the execution of the interrupt process is ended. Such a configuration makes it possible to accurately measure the metered amount of the content.

The permission information distribution server in accordance with the present invention is characterized in including permission information distribution means for distributing permission information, being information including a list of interrupt processes, being processes that are executed with a higher priority than a consumption of a content, to a content consumption terminal, being a terminal for reproducing the content, via a communication line.

The permission information distribution server may include process list preparation means for, based upon a program installed into the content consumption terminal, preparing a list of the interrupt processes, and the permission information distribution means may distribute permission information including a list of the interrupt processes prepared by the process list preparation means to the content consumption terminal via the communication line. Such a configuration makes it possible to distribute a list of the interrupt processes to the content consumption terminal based upon a program installed into the content consumption terminal.

The content consumption terminal in accordance with the present invention is characterized in including: a storage section for storing a list of unauthorized processes, being processes that might cause unauthorized copying of a content, or tampering of a content, and a list of interrupt processes, being processes that are executed with a higher priority than a consumption of a content; process determination means for determining whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and unauthorized process start suppression means for, when the process determination means determines that the process that is going to be started is the unauthorized process, suppressing a start of its process.

The content consumption terminal in accordance with the present invention is characterized in including: a storage section for storing data of a non-encrypted content, a list of unauthorized processes, being processes that might cause unauthorized copying of a content, or tampering of a content, and a list of interrupt processes, being processes that are executed with a higher priority than a consumption of the content; process determination means for determining whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and control means for non-encrypting an encrypted content, thereby to cause the storage section to store it, when the process determination means determines that the process that is going to be started is the unauthorized process, causing the consumption/execution means to forcibly end the consumption of the content, and deleting data of the non-encrypted content from the storage section.

The content consumption terminal may include communication means for receiving the encrypted content, and when a distribution side distributes the encrypted content with a consumption time of the content limited, the control means may measure the consumption time of the content, may stop a measurement of the consumption time of the content when the interrupt process is started, and may resume the measurement of the consumption time of the content when the execution of the interrupt process is ended. Such a configuration makes it possible to accurately measure the metered amount of the content.

The content consumption control system in accordance with the present invention, which has a content consumption terminal, being a terminal for reproducing a content, and a permission information distribution server that includes permission information distribution means for distributing permission information, being information including a list of unauthorized processes, being processes that might cause unauthorized copying of a content, or tampering of a content, and a list of interrupt processes, being processes that are executed with a higher priority than a consumption of the content, to the content consumption terminal via a communication line, is characterized in that the content consumption terminal includes: process determination means for making a reference to the received permission information, thereby to determine whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and unauthorized process start suppression means for, when the process determination means determines that the process that is going to be started is the unauthorized process, suppressing a start of its process.

The content consumption control system in accordance with the present invention, which includes a content consumption terminal, being a terminal for reproducing a content, and a permission information distribution server that includes permission information distribution means for distributing permission information, being information including a list of unauthorized processes, being processes that might cause unauthorized copying of a content, or tampering of a content, and a list of interrupt processes, being processes that are executed with a higher priority than a consumption of the content, to the content consumption terminal via a communication line, is characterized in that the content consumption terminal includes: process determination means for making a reference to the received permission information, thereby to determine whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and control means for, when the process determination means determines that the process that is going to be started is the unauthorized process, causing the consumption/execution means to forcibly end the consumption of the content, and deleting data of the content for consumption.

The content consumption terminal may include communication means for receiving the content, and when a distribution side distributes the content with a consumption time of the content limited, the control means may measure the consumption time of the content, may stop a measurement of the consumption time of the content when the interrupt process is started, and may resume the measurement of the consumption time of the content when the execution of the interrupt process is ended. Such a configuration makes it possible to accurately measure the metered amount of the content.

The content consumption terminal in accordance with the present invention is characterized in including: a storage section for storing a list of unauthorized processes, being processes that might cause unauthorized copying of a content, or tampering of a content, and a list of interrupt processes, being processes that are executed with a higher priority than a consumption of the content; process determination means for making a reference to the lists stored by the storage section, thereby to determine whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and unauthorized process start suppression means for, when the process determination means determines that the process that is going to be started is the unauthorized process, suppressing a start of its process.

The content consumption terminal in accordance with the present invention is characterized in including: communication means for receiving a list of unauthorized processes, being processes that might cause unauthorized copying of a content, or tampering of a content, and a list of interrupt processes, being processes that are executed with a higher priority than a consumption of the content, from a distribution side; permission storage means for storing a list of the unauthorized processes and a list of the interrupt processes received by the communication means; a storage section for storing the content for consumption; process determination means for making a reference to a list of the unauthorized processes and a list of the interrupt processes stored by the permission storage means, thereby to determine whether the process that is going to be started during the consumption of the content is the unauthorized process, the interrupt process, or a process other than the unauthorized process and the interrupt process; consumption/execution means for, when the process determination means determines that the process that is going to be started is the interrupt process, interrupting the consumption of the content till an execution of the interrupt process is ended; and control means for, when the process determination means determines that the process that is going to be started is the unauthorized process, causing the consumption/execution means to forcibly end the consumption of the content, and deleting data of the content for consumption from the storage section.

The content consumption terminal may include communication means for receiving the content, and when the distribution side distributes the content with a consumption time of the content limited, the control means may measure the consumption time of the content, may stop a measurement of the consumption time of the content when the interrupt process is started, and may resume the measurement of the consumption time of the content when the execution of the interrupt process is ended. Such a configuration makes it possible to accurately measure the metered amount of the content.

The permission information distribution server in accordance with the present invention is characterized in including permission information distribution means for distributing permission information, being information including a list of unauthorized processes, being processes that might cause unauthorized copying of a content, or tampering of a content, and a list of interrupt processes, being processes that are executed with a higher priority than a consumption of the content, to a content consumption terminal, being a terminal for reproducing the content, via a communication line.

The permission information distribution server may include process list preparation means for, based upon a program installed into the content consumption terminal, and a kind of the content that the content consumption terminal reproduces, preparing a list of the unauthorized processes, and a list of the interrupt processes, and the permission information distribution means may distribute permission information including a list of the unauthorized processes and a list of the interrupt processes prepared by the process list preparation means to the content consumption terminal via the communication line. Such a configuration makes it possible to distribute a list of the unauthorized processes and a list of the interrupt processes to the content consumption terminal based upon a program installed into the content consumption terminal, and a kind of the content that the content consumption terminal reproduces.

The content consumption control program in accordance with the present invention is characterized in causing a computer storing a list of interrupt processes, being processes that are executed with a higher priority than a consumption of a content, to execute: a process determination process of determining whether or not the process that is going to be started during the consumption of the content is the interrupt process; a control process of measuring a metered amount of the content, and when it is determined in the process determination process that the process that is going to be started is the interrupt process, causing a storage section to store the amount of the content used so far; a consumption/execution process of, when it is determined in the process determination process that the process that is going to be started is the interrupt process, interrupting the consumption of the content till an execution of the interrupt process is ended; and a process, being a control process, of, when the execution of the interrupt process is ended, detecting a content metered amount stored by the storage section, thereby to cause the consumption/execution process to resume the consumption of the content responding to the detected metered amount of the content.

The content consumption control program may cause the computer to execute a process of measuring a consumption time of the content as a measurement of the metered amount of the content, a process of, when the interrupt process is started, stopping a measurement of the consumption time of the content, and a process of, when the execution of the interrupt process is ended, resuming the measurement of the consumption time of the content, each of which is a control process. Such a configuration makes it possible to accurately measure the metered amount of the content.

The content consumption control program in accordance with the present invention is characterized in causing a computer storing permission information, being information including a list of interrupt processes, being processes that are executed with a higher priority than a consumption of a content, to execute: a process determination process of making a reference to the permission information, thereby to determine whether or not the process that is going to be started during the consumption of the content is the interrupt process; and a consumption/execution process of, when it is determined in the process determination process that the process that is going to be started is the interrupt process, interrupting the consumption of the content till an execution of interrupt process is ended.

When a distribution side distributes the content with a consumption time of the content limited, the content consumption control program may cause the computer to execute a process of measuring the consumption time of the content, a process of, when the interrupt process is started, stopping a measurement of the consumption time of the content, and a process of, when the execution of the interrupt process is ended, resuming the measurement of the consumption time of the content, each of which is a control process. Such a configuration makes it possible to accurately measure the metered amount of the content.

The permission information distribution program in accordance with the present invention is characterized in causing a computer storing a list of interrupt processes, being processes that are executed with a higher priority than a consumption of a content, to execute a permission information distribution process of distributing permission information, being information including a list of the interrupt processes, to a content consumption terminal, being a terminal for reproducing the content.

The permission information distribution program may cause the computer to execute a process list preparation process of preparing a list of the interrupt processes based upon a program installed into the content consumption terminal, and may cause the computer to execute a process, being a permission information distribution process, of distributing permission information including a list of the interrupt processes prepared in the process list preparation process. Such a configuration makes it possible to distribute a list of the interrupt processes to the content consumption terminal based upon a program installed into the content consumption terminal.

1 The content consumption control program in accordance with the present invention is characterized in causing a computer storing a list of unauthorized processes, being processes that might cause unauthorized copying of a content, or tampering of a content, and a list of interrupt processes, being processes that are executed with a higher priority than a consumption of a content, to execute: a process determination process of determining whether the process that is going to be started during the consumption of the content is the unauthorized process, the interrupt process, or a process other than the unauthorized process and the interrupt process; a consumption/execution process of, when it is determined in the process determination process that the process that is going to be started is the interrupt process, interrupting the consumption of the content till an execution of the interrupt process is ended; and an unauthorized process start suppression process of, when it is determined in the process determination process that the process that is going to be started is the unauthorized process, suppressing a start of its process.

The content consumption control program in accordance with the present invention is characterized in causing a computer storing a list of unauthorized processes, being processes that might cause unauthorized copying of a content, or tampering of a content, and a list of interrupt processes, being processes that are executed with a higher priority than a consumption of the content, to execute: a process determination process of determining whether the process that is going to be started during the consumption of the content is the unauthorized process, the interrupt process, or a process other than the unauthorized process and the interrupt process; a consumption/execution process of, when it is determined in the process determination process that the process that is going to be started is the interrupt process, interrupting the consumption of the content till an execution of the interrupt process is ended; and a process of non-encrypting an encrypted content, thereby to cause a storage section to store it, a process of, when it is determined in the process determination process that the process that is going to be started is the unauthorized process, causing the consumption/execution process to forcibly end the consumption of the content, and a process of deleting data of a non-encrypted content from the storage section, each of which is a control process.

When a distribution side distributes the content with a consumption time of the content limited, the content consumption control program may cause the computer to execute a process of measuring the consumption time of the content, a process of, when the interrupt process is started, stopping a measurement of the consumption time of the content, and a process of, when an execution of the interrupt process is ended, resuming the measurement of the consumption time of the content, each of which is a control process. Such a configuration makes it possible to accurately measure the metered amount of the content.

The content consumption control program in accordance with the present invention is characterized in causing a computer storing permission information, being information including a list of unauthorized processes, being processes that might cause unauthorized copying of a content, or tampering of a content, and a list of interrupt processes, being processes that are executed with a higher priority than a consumption of the content, to execute: a process determination process of making a reference to the permission information, thereby to determine whether the process that is going to be started during the consumption of the content is the unauthorized process, the interrupt process, or a process other than the unauthorized process and the interrupt process; a consumption/execution process of, when it is determined in the process determination process that the process that is going to be started is the interrupt process, interrupting the consumption of the content till an execution of the interrupt process is ended; and an unauthorized process start suppression process of, when it is determined in the process determination process that the process that is going to be started is the unauthorized process, suppressing a start of its process.

The content consumption control program in accordance with the present invention is characterized in causing a computer storing permission information, being information including a list of unauthorized processes, being processes that might cause unauthorized copying of a content, or tampering of a content, and a list of interrupt processes, being processes that are executed with a higher priority than a consumption of the content, to execute: a process determination process of making a reference to the permission information, thereby to determine whether the process that is going to be started during the consumption of the content is the unauthorized process, the interrupt process, or a process other than the unauthorized process and the interrupt process; a consumption/execution process of, when it is determined in the process determination process that the process that is going to be started is the interrupt process, interrupting the consumption of the content till an execution of the interrupt process is ended; and a process, being a control process, of non-encrypting an encrypted content, thereby to cause a storage section to store it, when it is determined in the process determination process that the process that is going to be started is the unauthorized process, causing the consumption/execution process to forcibly end the consumption of the content, and deleting data of the non-encrypted content from the storage section.

When a distribution side distributes the content with a consumption time of the content limited, the content consumption control program may cause the computer to execute a process of measuring the consumption time of the content, a process of, when the interrupt process is started, stopping a measurement of the consumption time of the content, and a process of, when an execution of the interrupt process is ended, resuming the measurement of the consumption time of the content, each of which is a control process. Such a configuration makes it possible to accurately measure the metered amount of the content.

The permission information distribution program in accordance with the present invention is characterized in causing a computer storing a list of unauthorized processes, being processes that might cause unauthorized copying of a content, or tampering of a content, and a list of interrupt processes, being processes that are executed with a higher priority than a consumption of the content, to execute a permission information distribution process of distributing permission information, being information including a list of the unauthorized processes and a list of the interrupt processes, to a content consumption terminal, being a terminal for reproducing the content.

The permission information distribution program may cause the computer to execute a process list preparation process of preparing a list of the unauthorized processes and a list of the interrupt processes based upon a program installed into the content consumption terminal, and may cause the computer to execute a process, being a permission information distribution process, of distributing permission information including a list of the unauthorized processes and a list of the interrupt processes prepared in the process list preparation process to the content consumption terminal. Such a configuration makes it possible to distribute permission information including a list of the unauthorized processes and a list of the interrupt processes to the content consumption terminal based upon a program installed into the content consumption terminal.

The content consumption control method in accordance with the present invention is characterized in: based upon a list of interrupt processes having a higher priority than a content consumption, determining whether the process that is going to be started or ended during the content consumption is equivalent to the interrupt process having a higher priority; in a case of a start of the interrupt process having a higher priority, preserving an amount of the content used so far, and interrupting the consumption of the content till the interrupt process is ended; and at the time that the interrupt process is ended, detecting the preserved metered amount of the content, and resuming the content consumption based upon a use control method of the content.

Additionally, in a case where the content use control method is a control method of a consumption time, or a number-of-times control method of measuring the number of times on the assumption that the content has been reproduced one time in the case that a certain time has passed since a consumption start, it is also possible to stop a measurement of the consumption time at the time of starting the interrupt process, and to resume the measurement of the consumption time at the time that the interrupt process is ended.

The content consumption control method in accordance with the present invention is characterized in: allowing a list of interrupt processes having a higher priority than a content consumption to be included in permission information of a content consumption, thereby to distribute this permission information to a content consumption terminal before reproducing a content; and that the content consumption terminal: makes a reference to the permission information, thereby to determine whether the process that is going to be started or ended during the consumption of the content is equivalent to the interrupt process having a higher priority; and interrupts the consumption of the content till the interrupt process is ended in a case of a start of the interrupt process having a higher priority.

Additionally, in a case where the content has been distributed with a limit to a consumption time set, or a limit to the number of times set, in which the number of times is measured on the assumption that the content has been reproduced one time in the case that a certain time has passed since a consumption start, it is also possible to stop a measurement of the consumption time at the time of starting the interrupt process, and to resume the measurement of the consumption time at the time that the interrupt process is ended.

The content consumption control method in accordance with the present invention is characterized in: having a list of unauthorized processes that might cause unauthorized copying/tampering of a content, and a list of interrupt processes having a higher priority than a content consumption; determining whether the process that is going to be started or ended during the content consumption is equivalent to any of the two processes; in a case where the process is equivalent to the interrupt process that is started, interrupting the consumption of the content till the interrupt process is ended; and in a case where the process is the unauthorized process, suppressing a start of its process.

The content consumption control method in accordance with the present invention is characterized in: having a list of unauthorized processes that might cause unauthorized copying/tampering of a content, and a list of interrupt processes that have a higher priority than a content consumption; determining whether the process that is going to be started or ended during the content consumption is equivalent to any of the two processes; in a case where the process is equivalent to the interrupt process that is started, interrupting the consumption of the content till the interrupt process is ended; and deleting data of the content for consumption.

Additionally, in a case where the content has been distributed with a limit to a consumption time set, or a limit to the number of times set, in which the number of times is measured on the assumption that the content has been reproduced one time in the case that a certain time has passed since a consumption start, it is also possible to stop a measurement of the consumption time at the time of starting the interrupt process, and to resume the measurement of the consumption time at the time that the interrupt process is ended.

The content consumption control method in accordance with the present invention may be a method of filing a list of unauthorized processes that might cause unauthorized copying/tampering of a content, and a list of interrupt processes that have a higher priority than a content consumption into a permission of a content consumption, thereby to distribute this permission to a content consumption terminal before reproducing the content, and it is also possible that the content consumption terminal makes a reference to the permission, thereby to determine whether the process that is going to be started or ended during the content consumption is equivalent to any of the two processes, interrupts the consumption of the content till the interrupt process is ended in a case where the process is equivalent to the interrupt process that is started, and suppresses a start of the process in a case where the process is the unauthorized process.

The content consumption control method in accordance with the present invention is characterized in: filing a list of unauthorized processes that might cause unauthorized copying/tampering of a content, and a list of interrupt processes that have a higher priority than a content consumption into a permission of a content consumption, thereby to distribute this permission to a content consumption terminal before reproducing the content; and that the content consumption terminal: makes a reference to the permission, thereby to determine whether the process that is going to be started/ended during the content consumption is equivalent to any of the two processes; interrupts the consumption of the content till the interrupt process is ended in a case where the process is equivalent to the interrupt process that is started; and forcibly ends the consumption of the content to delete data of a non-encrypted content in a case where the process is the unauthorized process.

Additionally, in a case where the content has been distributed with a limit to a consumption time set, or a limit to the number of times set, in which the number of times is measured on the assumption that the content has been reproduced one time in the case that a certain time has passed since a consumption start, it is also possible to stop a measurement of the consumption time at the time of starting the interrupt process, and to resume the measurement of the consumption time at the time that the interrupt process is ended.

The content consumption control system in accordance with the present invention is characterized in having: a list of interrupt processes having a higher priority than a content consumption; means for determining whether the process that is going to be started or ended during the content consumption is equivalent to the interrupt process; means for preserving an amount of the content used so far; means for, in a case of a start of the interrupt process, interrupting the consumption of the content till the interrupt process is ended; and means for, at the time that the interrupt process is ended, detecting the preserved content metered amount, and resuming the content consumption in line with a use control method.

Additionally, in a case where the content use control method is a control method of a consumption time, or a number-of-times control method of measuring the number of times on the assumption that the content has been reproduced one time in the case that a certain time has passed since a consumption start, it is also possible that the content consumption control system is configured so as to have means for stopping a measurement of the consumption time at the time of starting the interrupt process, and resuming the measurement of the consumption time at the time that the interrupt process is ended.

The content consumption control system in accordance with the present invention is characterized in that: a server has means for distributing a permission of a content consumption having a list of interrupt processes filed to a content consumption terminal before reproducing a content; and the content consumption terminal has the means for: making a reference to the permission, thereby to determine whether the process that is going to be started/ended during the content consumption is equivalent to the interrupt process; and in a case of a start of the interrupt process, interrupting the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, it is also possible that the content consumption terminal is configured so as to have means for stopping a measurement of the consumption time at the time of starting the interrupt process, and resuming the measurement of the consumption time at the time that the interrupt process is ended.

The terminal in accordance with the present invention is characterized in having the means for: making reference to a permission of a content consumption having a list of interrupt processes having a higher priority than a content consumption filed, thereby to determine whether the process that is going to be started or ended during the content consumption is equivalent to the interrupt process; and in a case of a start of the interrupt process, interrupting the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, it is also possible that the terminal is configured so as to have means for stopping a measurement of the consumption time at the time of starting the interrupt process, and resuming the measurement of the consumption time at the time that the interrupt process is ended.

The server in accordance with the present invention is characterized in having means for distributing permission of a content consumption having a list of interrupt processes having a higher priority than a content consumption filed to a content consumption terminal before reproducing a content.

Additionally, it is also possible that the server has means for, based upon a program installed into the terminal to which the permission of the content consumption is distributed, preparing a list of the interrupt processes having a higher priority than the content consumption.

The content consumption control system in accordance with the present invention is characterized in having: a list of unauthorized processes that might cause unauthorized copying/tampering of a content; a list of processes (interrupt processes) having a higher priority than a content consumption; means for determining whether the process that is going to be started or ended during the content consumption is equivalent to any of the two process; means for, in a case where the process is equivalent to the interrupt process that is be started, interrupting the consumption of the content till the interrupt process is ended; and means for, in a case where the process is the unauthorized process, suppressing a start of its process.

The content consumption control system in accordance with the present invention is characterized in having: a list of unauthorized processes that might cause unauthorized copying/tampering of a content; a list of interrupt processes having a higher priority than a content consumption; means for determining whether the process that is going to be started/ended during the content consumption is equivalent to any of the two processes; means for, in a case where the process is equivalent to the interrupt process that is started, interrupting the consumption of the content till the interrupt process is ended; and means for, in a case where the process is the unauthorized process, forcibly ending the consumption of the content to delete data of a non-encrypted content.

Additionally, in a case where the content has been distributed with a limit to a consumption time set, or a limit to the number of times set, in which the number of times is measured on the assumption that the content has been reproduced one time in the case that a certain time has passed since a consumption start, it is also possible that the content consumption control system has means for stopping a measurement of the consumption time at the time of starting the interrupt process, and resuming the measurement of the consumption time at the time that the interrupt process is ended.

The content consumption control system in accordance with the present invention is characterized in that: a server has means for distributing a permission of a content consumption having a list of unauthorized processes that might cause unauthorized copying/tampering of a content, and a list of interrupt processes having a higher priority than a content consumption filed to a content consumption terminal before reproducing the content; and the content consumption terminal has the means for: making a reference to the permission, thereby to determine whether the process that is going to be started/ended during the content consumption is equivalent to any of the two processes; in a case of a start of the interrupt process, interrupting the consumption of the content till the interrupt process is ended; and in a case of the unauthorized process, suppressing a start of its process.

The content consumption control system in accordance with the present invention is characterized in that: a server has means for distributing a permission of a content consumption having a list of unauthorized processes that might cause unauthorized copying/tampering of a content, and a list of interrupt processes having a higher priority than a content consumption filed to a content consumption terminal before reproducing the content; and the content consumption terminal has the means for: making a reference to the permission, thereby to determine whether the process that is going to be started/ended during the content consumption is equivalent to any of the two processes; in a case of a start of the interrupt process, interrupting the consumption of the content till the interrupt process is ended; and in a case of the unauthorized process, forcibly ending the consumption of the content to delete data of the content for consumption.

Additionally, in a case where the content has been distributed with a limit to a consumption time set, or a limit to the number of times set, in which the number of times is measured on the assumption that the content has been reproduced one time in the case that a certain time has passed since a consumption start, it is also possible that the content consumption terminal has means for stopping a measurement of the consumption time at the time of starting the interrupt process, and resuming the measurement of the consumption time at the time that the interrupt process is ended.

The terminal in accordance with the present invention is characterized in having the means for: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case of a start of the interrupt process, interrupting the consumption of the content till the interrupt process is ended; and in a case of the unauthorized process, suppressing a start of its process.

The terminal in accordance with the present invention is characterized in having the means for: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case of a start of the interrupt process, interrupting the consumption of the content till the interrupt process is ended; and in a case of the unauthorized process, forcibly ending the consumption of the content to delete data of the content for consumption.

Additionally, in a case where the content has been distributed with a limit to a consumption time set, or a limit to the number of times set, in which the number of times is measured on the assumption that the content has been reproduced one time in the case that a certain time has passed since a consumption start, the terminal may include means for stopping a measurement of the consumption time at the time of starting the interrupt process, and resuming the measurement of the consumption time at the time that the interrupt process is ended.

The server in accordance with the present invention is characterized in including means for distributing a permission of a content consumption having a list of unauthorized processes that might cause unauthorized copying/tampering of a content, and a list of interrupt processes having a higher priority than a content consumption filed to a content consumption terminal before reproducing the content.

The server in accordance with the present invention is characterized in including means for, responding to a program installed into the terminal to which the permission of the content consumption is distributed, and a kind of the content that is reproduced, preparing a list of the interrupt processes and a list of the unauthorized processes.

The program in accordance with the present invention, which has a list of interrupt processes having a higher priority than a content consumption, is a program for causing a content consumption terminal to execute the processes of: determining whether the process that is going to be started or ended during the content consumption is equivalent to the interrupt process; preserving a content amount used so far; in a case of a start of the interrupt process, interrupting the consumption of the content till the interrupt process is ended; and at the moment that the interrupt process is ended, detecting the preserved content metered amount, and resuming the content consumption in line with a use control method of the content.

Additionally, in a case where the content use control method is a control method of a consumption time, or a number-of-times control method of measuring the number of times on the assumption that the content has been reproduced one time in the case that a certain time has passed since a consumption start, the above-mentioned program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a content consumption terminal to execute the processes of: making a reference to a permission of a content consumption having a list of interrupt processes having a higher priority than a content consumption filed, thereby to determine whether the process that is going to be started or ended during the content consumption is equivalent to the interrupt process; and in a case of a start of the interrupt process, interrupting the consumption of the content till the interrupt process is ended.

In a case where the content has been distributed with a limit to a consumption time set, or a limit to the number of times set, in which the number of times is measured on the assumption that the content has been reproduced one time in the case that a certain time has passed since a consumption start, the above-mentioned program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a server to execute a process of distributing a permission of a content consumption having a list of interrupt processes having a higher priority than a content consumption filed to a content consumption terminal before reproducing a content.

Additionally, the above-mention program may cause the server to execute a process of, based upon a program installed into the terminal to which the permission of the content consumption is distributed, preparing a list of the interrupt processes.

The program in accordance with the present invention, which has a list of unauthorized processes that might cause unauthorized copying/tampering of a content, and a list of interrupt processes having a higher priority than a content consumption, is a program for causing a content consumption terminal to execute the processes of: determining whether the process that is going to be started/ended during the content consumption is equivalent to any of the two processes; in a case of a start of the interrupt process, interrupting the consumption of the content till the interrupt process is ended; and in a case of the unauthorized process, suppressing a start of its process.

The program in accordance with the present invention, which has a list of unauthorized processes that might cause unauthorized copying/tampering of a content, and a list of interrupt processes having a higher priority than a content consumption, is a program for causing a content consumption terminal to execute the processes of: determining whether the process that is going to be started/ended during the content consumption is equivalent to any of the above-mentioned two processes; in a case of a start of the interrupt process, interrupting the consumption of the content till the interrupt process is ended; and in a case of the unauthorized process, forcibly ending the consumption of the content to delete data of a non-encrypted content.

Additionally, in a case where the content has been distributed with a limit to a consumption time set, or a limit to the number of times set, in which the number of times is measured on the assumption that the content has been reproduced one time in the case that a certain time has passed since a consumption start, the above-mentioned program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a content consumption terminal to execute the processes of: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case of a start of the interrupt process, interrupting the consumption of the content till the interrupt process is ended; and in a case of the unauthorized process, suppressing a start of its process.

The program in accordance with the present invention is a program for causing a content consumption terminal to execute the processes of: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the above-mentioned two processes; in a case of a start of the interrupt process, interrupting the consumption of the content till the interrupt process is ended; and in a case of the unauthorized process, forcibly ending the consumption of the content to delete data of a non-encrypted content.

In a case where the content has been distributed with a limit to a consumption time set, or a limit to the number of times set, in which the number of times is measured on the assumption that the content has been reproduced one time in the case that a certain time has passed since a consumption start, the above-mentioned program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a server to execute a process of distributing a permission of a content consumption having a list of unauthorized processes that might cause unauthorized copying/tampering of a content, and a list of interrupt processes having a higher priority than a content consumption filed to a content consumption terminal before reproducing the content.

Additionally, the above-mentioned program may cause the server to execute a process of, responding to a program installed into the terminal to which the permission of the content consumption is distributed, and a kind of the content that is reproduced, preparing a list of the unauthorized processes and a list of the interrupt processes.

The content consumption control method in accordance with the present invention is characterized in: having a list of interrupt processes having a higher priority than a content consumption, determining whether the process that is going to be started/ended during the content consumption is equivalent to the interrupt process; preserving a content amount used so far; in a case of a start of the interrupt process, notifying a user that the interrupt process has been started, and starting the interrupt process when the user inputs the effect that the interrupt process is executed with a higher priority than the content consumption; interrupting the consumption of the content till the interrupt process is ended, and detecting the preserved content metered amount at the moment that said interrupt process is ended; and resuming the content consumption in line with a use control method of the content.

Additionally, in a case where the content use control method is a control method of a consumption time, or a number-of-times control method of measuring the number of times on the assumption that the content has been reproduced one time in the case that a certain time has passed since a consumption start, a measurement of the consumption time may be stopped at the time of starting the interrupt process, and the measurement of the consumption time may be resumed at the time that the interrupt process is ended.

The content consumption control method in accordance with the present invention is characterized in: filing a list of interrupt processes into a permission of a content consumption; and distributing the permission to a content consumption terminal before reproducing a content; and that the content consumption terminal: makes a reference to the permission, thereby to determine whether the process that is going to be started/ended during the content consumption is equivalent to the interrupt process; and notifies a user that the interrupt process has been started in a case of a start of the interrupt process, starts the interrupt process when the user inputs the effect that the interrupt process is executed with a higher priority than the content consumption, and interrupts the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, a measurement of the consumption time may be stopped at the time of starting the interrupt process, and the measurement of the consumption time may be resumed at the time that the interrupt process is ended.

The content consumption control method in accordance with the present invention is characterized in: having a list of unauthorized processes that might cause unauthorized copying/tampering of a content, and a list of interrupt processes that are executed with a higher priority than a content consumption; determining whether the process that is going to be started/ended during the content consumption is equivalent to any of the two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of the unauthorized process, suppressing a start of its process.

The content consumption control method in accordance with the present invention is characterized in: having a list of unauthorized processes that might cause unauthorized copying/tampering of a content, and a list of interrupt processes that are executed with a higher priority than a content consumption; determining whether the process that is going to be started/ended during the content consumption is equivalent to any of the two processes; in a case of a start of the interrupt process, notifying a user that the interrupt process has been started; and when the user inputs the effect that the interrupt process is executed with a higher priority than the content consumption, starting the interrupt process, interrupting the consumption of the content till the interrupt process is ended, and deleting data of the content for consumption.

Additionally, the content consumption control method is characterized in, in a case where the content has been distributed with a limit to a consumption time set, or a limit to the number of times set, in which the number of times is measured on the assumption that the content has been reproduced one time in the case that a certain time has passed since a consumption start, stopping a measurement of the consumption time at the time of starting said interrupt process, and resuming the measurement of the consumption time at the time that the interrupt process is ended.

The content consumption control method in accordance with the present invention is characterized in: filing a list of unauthorized processes that might cause unauthorized copying/tampering of a content, and a list of interrupt processes that are executed with a higher priority than a content consumption into a permission of a content consumption; and distributing the permission to a content consumption terminal before reproducing the content; and that the content consumption terminal: makes a reference to the permission, thereby to determine whether the process that is going to be started/ended during the content consumption is equivalent to any of the two processes; notifies a user that the interrupt process has been started in a case of a start of the interrupt process, starts the interrupt process when the user inputs the effect that the interrupt process is executed with a higher priority than the content consumption, and interrupts the consumption of the content till the interrupt process is ended; and in a case of the unauthorized process, suppresses a start of its process.

The content consumption control method in accordance with the present invention is characterized in: filing a list of unauthorized processes that might cause unauthorized copying/tampering of a content, and a list of interrupt processes that are executed with a higher priority than a content consumption into a permission of a content consumption; and distributing the permission to a content consumption terminal before reproducing the content; and that the content consumption terminal: makes a reference to the permission, thereby to determine whether the process that is going to be started or ended during the content consumption is equivalent to any of the two processes; notifies a user that the interrupt process has been started in a case of a start of the interrupt process, starts the interrupt process when the user inputs the effect that the interrupt process is executed with a higher priority than the content consumption, and interrupts the consumption of the content till the interrupt process is ended; and forcibly ends the consumption of the content, thereby to delete data of a non-encrypted content in a case of the unauthorized process.

Additionally, in a case where the content has been distributed with a limit to a consumption time set, or a limit to the number of times set, in which the number of times is measured on the assumption that the content has been reproduced one time in the case that a certain time has passed since a consumption start, a measurement of the consumption time may be stopped at the time of starting said interrupt process, and the measurement of the consumption time may be resumed at the time that the interrupt process is ended.

The content consumption control system in accordance with the present invention, which has a list of interrupt processes having a higher priority than a content consumption, is characterized in having the means for: determining whether the process that is going to be started/ended during the content consumption is equivalent to the interrupt process; preserving an amount of the content used so far; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and at the time that the interrupt process is ended, detecting the preserved content metered amount, and resuming the content consumption in line with a use control method of the content.

Additionally, in a case where the content use control method is a control method of a consumption time, or a number-of-times control method of measuring the number of times on the assumption that the content has been reproduced one time in the case that a certain time has passed since a consumption start, the content consumption control system may have means for stopping a measurement of the consumption time at the time of starting the interrupt process, and resuming the measurement of the consumption time at the time that the interrupt process is ended.

The content consumption control system in accordance with the present invention is characterized in that: a server has means for distributing a permission of a content consumption having a list of interrupt processes having a higher priority than a content consumption filed to a content consumption terminal before reproducing a content; and the content consumption terminal has the means for: making a reference to the permission, thereby to determine whether the process that is going to be started/ended during the content consumption is equivalent to the interrupt process; and in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, the content consumption terminal may have means for stopping a measurement of the consumption time at the time of starting said interrupt process, and resuming the measurement of the consumption time at the time that the interrupt process is ended.

The terminal in accordance with the present invention is characterized in having the means for: making a reference to a permission of a content consumption having a list of interrupt processes having a higher priority than a content consumption filed, thereby to determine whether the process that is going to be started/ended during the content consumption is equivalent to the interrupt process; and in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, the terminal may have means for stopping a measurement of the consumption time at the time of starting the interrupt process, and resuming the measurement of the consumption time at the time that the interrupt process is ended.

The content consumption control system in accordance with the present invention is characterized in having: a list of unauthorized processes that might cause unauthorized copying/tampering of a content; a list of interrupt processes having a higher priority than a content consumption; means for determining whether the process that is going to be started/ended during the content consumption is equivalent to any of the two processes; means for, in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and means for, in a case of the unauthorized process, suppressing a start of its process.

The content consumption control system in accordance with the present invention is characterized in having: a list of unauthorized processes that might cause unauthorized copying/tampering of a content; a list of interrupt processes having a higher priority than a content consumption; means for determining whether the process that is going to be started/ended during the content consumption is equivalent to any of the two processes; means for, in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and means for, in a case of the unauthorized process, forcibly ending the consumption of the content to delete data of a non-encrypted content.

Additionally, in a case where the content has been distributed with a limit to a consumption time set, or a limit to the number of times set, in which the number of times is measured on the assumption that the content has been reproduced one time in the case that a certain time has passed since a consumption start, the content consumption control system may have means for stopping a measurement of the consumption time at the time of starting the interrupt process, and resuming the measurement of the consumption time at the time that the interrupt process is ended.

The content consumption control system in accordance with the present invention is characterized in that: a server has means for distributing a permission of a content consumption having a list of unauthorized processes that might cause unauthorized copying/tampering of a content, and a list of interrupt processes having a higher priority than a content consumption filed to a content consumption terminal before reproducing the content; and the content consumption terminal has the means for: making a reference to the permission, thereby to determine whether the process that is going to be started/ended during the content consumption is equivalent to any of the two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of said unauthorized process, suppressing a start of its process.

The content consumption control system in accordance with the present invention is characterized in that: a server has means for distributing a permission of a content consumption having a list of unauthorized processes that might cause unauthorized copying/tampering of a content, and a list of interrupt processes having a higher priority than a content consumption filed to a content consumption terminal before reproducing the content; and the content consumption terminal has the means for: making a reference to the permission, thereby to determine whether the process that is going to be started/ended during the content consumption is equivalent to any of the two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of the unauthorized process, forcibly ending the consumption of the content to delete data of the content for consumption.

Additionally, in a case where the content has been distributed with a limit to a consumption time set, or a limit to the number of times set, in which the number of times is measured on the assumption that the content has been reproduced one time in the case that a certain time has passed since a consumption start, the content consumption terminal may have means for stopping a measurement of the consumption time at the time of starting the interrupt process, and resuming the measurement of the consumption time at the time that the interrupt process is ended.

The terminal in accordance with the present invention is characterized in having the means for: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case where the process is equivalent to the interrupt process that is started, notifying a user that the interrupt process has been started, starting the interrupt process when the user inputs the effect that the interrupt process is executed with a higher priority than the content consumption, and interrupting the consumption of the content till the interrupt process is ended; and in a case where the process is the unauthorized process, suppressing a start of its process.

The terminal in accordance with the present invention is characterized in having the means for: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of the unauthorized process, forcibly ending the consumption of the content to delete data of the content for consumption.

Additionally, in a case where the content has been distributed with a limit to a consumption time set, or a limit to the number of times set, in which the number of times is measured on the assumption that the content has been reproduced one time in the case that a certain time has passed since a consumption start, the terminal may have means for stopping a measurement of the consumption time at the time of starting the interrupt process, and resuming the measurement of the consumption time at the time that the interrupt process is ended.

The program in accordance with the present invention, which has a list of interrupt processes having a higher priority than a content consumption, is a program for causing a content consumption terminal to execute the processes of: determining whether the process that is going to be started/ended during the content consumption is equivalent to the interrupt process; preserving an amount of the content used so far; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and at the time that the interrupt process is ended, detecting the preserved content metered amount, and resuming the content consumption in line with a use control method of the content.

Additionally, in a case where the content use control method is a control method of a consumption time, or a number-of-times control method of measuring the number of times on the assumption that the content has been reproduced one time in the case that a certain time has passed since a consumption start, the program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a content consumption terminal to execute the processes of: making a reference to a permission of a content consumption having a list of interrupt processes having a higher priority than a content consumption filed, thereby to determine whether the process that is going to be started/ended during the content consumption is equivalent to the interrupt process; and in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended.

Additionally, in a case where the content has been distributed with a limit to a consumption time set, or a limit to the number of times set, in which the number of times is measured on the assumption that the content has been reproduced one time in the case that a certain time has passed since a consumption start, the program may cause the content consumption terminal to execute a process of stopping a measurement of the consumption time at the time of starting the interrupt process, and resuming the measurement of the consumption time at the time that the interrupt process is ended.

The program in accordance with the present invention, which has a list of unauthorized processes that might cause unauthorized copying/tampering of a content, and a list of interrupt processes having a higher priority than a content consumption, is a program for causing a content consumption terminal to execute the processes of: determining whether the process that is going to be started/ended during the content consumption is equivalent to any of the two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of the process is the unauthorized process, suppressing a start of its process

The program in accordance with the present invention, which has a list of unauthorized processes that might cause unauthorized copying/tampering of a content, and a list of interrupt processes having a higher priority than a content consumption, is a program causing a content consumption terminal to execute the processes of: determining whether the process that is going to be started/ended during the content consumption is equivalent to any of the above-mentioned two processes; in a case of the interrupt process that is going to be stared, notifying a user that the interrupt process has been started, starting the interrupt process when the user inputs the effect that the interrupt process is executed with a higher priority than the content consumption, and interrupting the consumption of the content till the interrupt process is ended; and in a case of the unauthorized process, forcibly ending the consumption of the content to delete data of a non-encrypted content.

Additionally, in a case where the content has been distributed with a limit to a consumption time set, or a limit to the number of times set, in which the number of times is measured on the assumption that the content has been reproduced one time in the case that a certain time has passed since a consumption start, the program may cause the content consumption terminal to execute a process of stopping a measurement of the consumption time at the time of starting the interrupt process, and resuming the measurement of the consumption time at the time that the interrupt process is ended.

The program in accordance with the present invention is a program for causing a content consumption terminal to execute the processes of: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the two processes; in a case of a start of the interrupt process, notifying a user that the interrupt process has been started, starting the interrupt process when the user inputs an effect that the interrupt process is executed with a higher priority than the content consumption, and interrupting the consumption of the content till the interrupt process is ended; and in a case of the unauthorized process, suppressing a start of its process.

The program in accordance with the present invention is a program for causing a content consumption terminal to execute the processes of: making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of the above-mentioned two processes; in a case of a start of the interrupt process, notifying a user that the interrupt process has been started, starting the interrupt process when the user inputs the effect that the interrupt process is executed with a higher priority than the content consumption, and interrupting the consumption of the content till the interrupt process is ended; and in a case of the unauthorized process, forcibly ending the consumption of the content to delete data of a non-encrypted content.

Additionally, in a case where the content has been distributed with a limit to a consumption time set, or a limit to the number of times set, in which the number of times is measured on the assumption that the content has been reproduced one time in the case that a certain time has passed since a consumption start, the program may cause the content consumption terminal to execute a process of stopping a measurement of the consumption time at the time of starting the interrupt process, and resuming the measurement of the consumption time at the time that the interrupt process is ended.

### [EFFECTS OF THE INVENTION]

The first effect of the present invention lies in that the use control can be appropriately taken for the content as well distributed with a limit to the usage time and the use number of times affixed, for example, the content for a trial even though the viewing thereof is interrupted due to the interrupt such as an arrival of the incoming call and E-mail, and resumed. The reason is that the metering interrupt means preserves the content amount used so far at the time of interrupting the content consumption, the metered amount detection means detects the remaining valid portion at the time of resuming the content consumption, and the use control resume means resumes the consumption of the content so as to permit the consumption of only the remaining valid portion responding to the details of a limit to the content use.

Further, the second effect of the present invention lies in that an attempt to start the unauthorized process (process causing the problem in the copyright) during the content consumption by the user, which is accompanied by the mobile telephone terminal adapted to have an open system/a high functionality, can be prevented. The reason is that the process determination means determines whether or not the process that is going to be started is an authorized process, and the unauthorized process suppression means suppresses a start of its authorized process, or forcibly ends the consumption of the content, thereby to delete data of the decoded content from the memory.

### [BRIEF DESCRIPTION OF THE DRAWINGS]

[Fig. 1] Fig. 1 is a block diagram illustrating one configuration example of a first embodiment of the present invention.
[Fig. 2] Fig. 2 is an explanatory view illustrating a correspondence relation between a command input into the command input means by a user, and information that the consumption/execution means outputs to the control means.
[Fig. 3] Fig. 3 is an explanatory view illustrating a response that the control means outputs based upon the information input by the consumption/execution means, and its condition.
[Fig. 4] Fig. 4 is an explanatory view illustrating an operation that the consumption/execution means performs for the input response.
[Fig. 5] Fig. 5 is an explanatory view illustrating a predetermined operation that the control means performs before outputting a response to the consumption/execution means.
[Fig. 6] Fig. 6 is an explanatory view illustrating a condition in which the control means inputs each command into the consumption/execution means.
[Fig. 7] Fig. 7 is an explanatory view illustrating an operation that the consumption/execution means performs in the case that each command has been input.
[Fig. 8] Fig. 8 is a block diagram illustrating one configuration example of an internal configuration of the control means.
[Fig. 9] Fig. 9 is an explanatory view illustrating an operation corresponding to the instruction that the control means outputs.
[Fig. 10] Fig. 10 is a flowchart for explaining an operation of the first embodiment.
[Fig. 11] Fig. 11 is a flowchart for explaining an operation in the case that no command is input during the consumption of the content.
[Fig. 12] Fig. 12 is a block diagram illustrating one configuration example of a second embodiment of the present invention.
[Fig. 13] Fig. 13 is an explanatory view for explaining a correspondence relation between a command input into input means by the user, and an instruction that the control means outputs to the consumption/execution means.
[Fig. 14] Fig. 14 is an explanatory view for explaining a pre-decided operation that the control means performs before or after outputting the instruction.
[Fig. 15] Fig. 15 is an explanatory view illustrating an operation that the consumption/execution means performs corresponding to the instruction input by the control means.
[Fig. 16] Fig. 16 is a flowchart for explaining an operation of the second embodiment.
[Fig. 17] Fig. 17 is a flowchart for explaining an operation in the case that no command is input during the consumption of the content.
[Fig. 18] Fig. 18 is a block diagram illustrating one configuration example of a third embodiment.
[Fig. 19] Fig. 19 is a block diagram illustrating one configuration example of a fourth embodiment.
[Fig. 20] Fig. 20 is an explanatory view for explaining one example of the conventional method of resuming the interrupt of the content consumption.
[Fig. 21] Fig. 21 is a block diagram illustrating one configuration example of a fifth embodiment.
[Fig. 22] Fig. 22 is a block diagram illustrating one configuration example of the fifth embodiment.
[Fig. 23] Fig. 23 is a flowchart for explaining an operation of the fifth embodiment.
[Fig. 24] Fig. 24 is a view for explaining the fifth embodiment of the present invention.

### [DESCRIPTION OF NUMERALS]

- 3: consumption device
- 12: content consumption interrupt means
- 13: interrupt position detection means
- 14: consumption resume information detection means
- 21: metering stop means
- 22: metered amount detection means
- 23: use control resume means
- 24: permission exercise means
- 150: content distribution server
- 151: encapsulated content distribution means
- 160: permission information distribution server
- 161: permission information distribution means
- 301: communication means
- 302: content storage means
- 303: permission storage means
- 304: consumption/execution means
- 305: control means
- 306: command input means
- 307: process monitoring means
- 308: process determination means
- 309: unauthorized process start suppression means
- 351: program control processor
- 352: UI controller
- 353: inputter
- 354: outputter
- 361: communicator
- 362: content storage memory
- 363: permission storage memory
- 370: program storage memory
- 371a and 371b: general programs
- 374: content consumption/execution program
- 375: content consumption/execution control program
- 377: process monitoring program
- 378: process determination program
- 379: unauthorized process start suppression program

### [BEST MODE FOR CARRYING OUT THE INVENTION]

### Embodiment 1

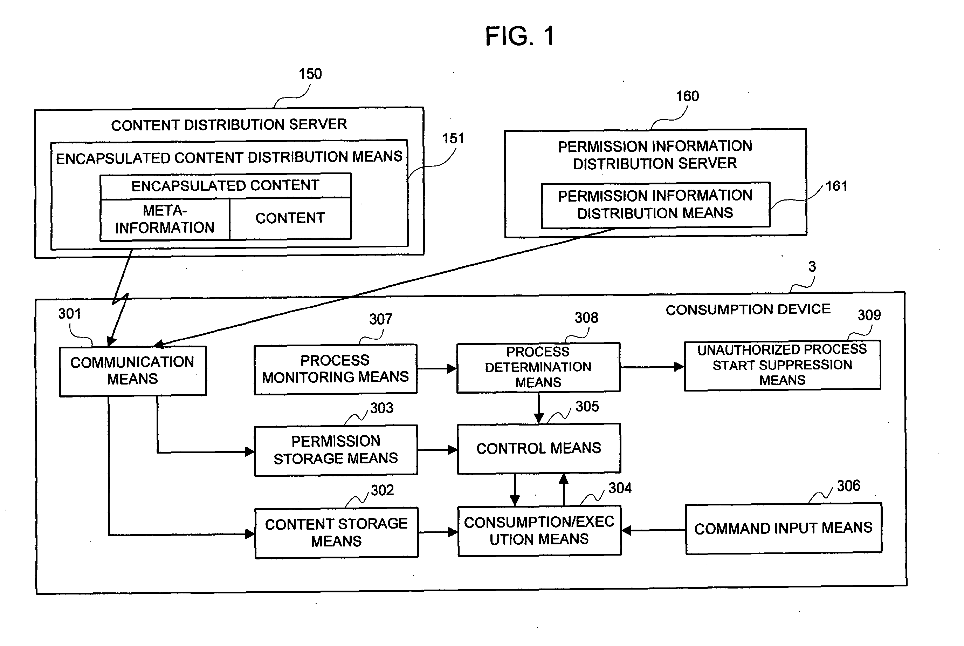

The first embodiment of the present invention will be explained by making a reference to the accompanied drawings. Fig. 1 is a block diagram illustrating one configuration example of the first embodiment of the present invention.

The first embodiment of the present information includes a content distribution server 150 for distributing the content, a permission information distribution server 160 for distributing permission information, being information indicating the permission of the content, and a consumption device (content consumption terminal) 3 for reproducing the content.

The content distribution server 150 includes content distribution means 151 for distributing the content, and the permission information distribution server 160 includes permission information distribution means 161 for distributing the permission information. Additionally, the content distribution server 150 pre-transmits information indicating the details of the content, which is distributed, to the permission information distribution server 160, and the permission information distribution server 160 generates permission information based upon the received information.

The consumption device 3 includes communication means 301 that downloads the content from the content distribution server 150, or receives the content via the communication means 301 from the terminal retaining the content, and receives the permission information from the permission information distribution server 160, content storage means 302 for storing the content, permission storage means 303 for storing the permission information, consumption/execution means 304 for reproducing the content, control means 305 for controlling an entirety of the consumption device 3, command input means 306 for inputting an instruction of a user, process monitoring means 307 for monitoring the process that the consumption device 3 is going to start, process determination means 308 for drawing a conclusion as to which type of the process the consumption device 3 is going to start, and unauthorized process start repression means 309 for suppressing the start of the unauthorized process.

The consumption device 3 is realized, for example, by means of the mobile telephone terminal. Further, the consumption device 3 may be realized, for example, by means of the mobile terminal such as a PDA (Personal Digital Assistant), and terminals operating under the program control such as a PC, an information household appliance, a car navigation system, and a music player.

A process for collecting into one file (hereinafter, referred to as an encapsulation) is performed for the content based upon a specific format, and the processed content is stored in the content distribution server 150 together with meta-information, being information including communication information such as URL (Uniform Resource Locators), which allows the consumption device 3 to acquire the permission information. Further, the meta-information includes an ID (content ID) for identifying the content. Hereinafter, the content that was encapsulated is referred to as an encapsulated content. Additionally, one part or the entirety of data of the content may be encrypted in encapsulating the content.

The permission information is information indicating the condition that allows the consumption device 3 to reproduce the content. The permission information includes the content ID that the meta-information includes for the purpose of causing the content to correspond to the encapsulated content, and information indicating the condition for using the content, for example, a use period of time, the use number of times, and a usage time. The permission information distribution server 160 distributes the permission information to the consumption device 3 via the communication means 301 before the consumption device 3 reproduces the encapsulated content, and the communication means 301 causes the permission storage means 303 to store the distributed permission information.

The communication means 301, which is means for downloading the encapsulated content and the permission information into the consumption device 3, may be realized by means of any of an Internet connection via a carrier communication network of the mobile telephone, communication means employing infrared-red communication, a radio LAN (Local Area Network), Bluetooth (Registered Trademark), etc. and means for incorporating data into the consumption device 3, which employs a physical record medium such as a memory card.

The content storage means 302 stores the encapsulated content that was downloaded. The permission storage means 303 stores the downloaded permission information. The permission storage means 303 stores the permission information, as a rule, in a format of being not tampered unauthorizedly from the outside. As a method of managing the permission information can be employed, for example, the method of storing the permission information into a memory having encryption, an E-signature, and tamper resistance (for example, an SD card (Registered Trademark), MAGICGATE (Registered Trademark), MMC (MultiMediaCard (Registered Trademark), etc.), and an anti-tamper device (for example, a cryptography accelerator such as SesureSH, or the like, being a device satisfying the requirement of FIPS140-1 or FIPS140-2 specified by NIST (National Institute of Standards and Technology)), or the method of controlling an access to database having the permission information stored.

The user selects the encapsulated content that the user desires to reproduce with its key input, etc., and the command input means 306 receives each of the commands of reproducing starting, ending, interrupting, and resuming the content input by the user.

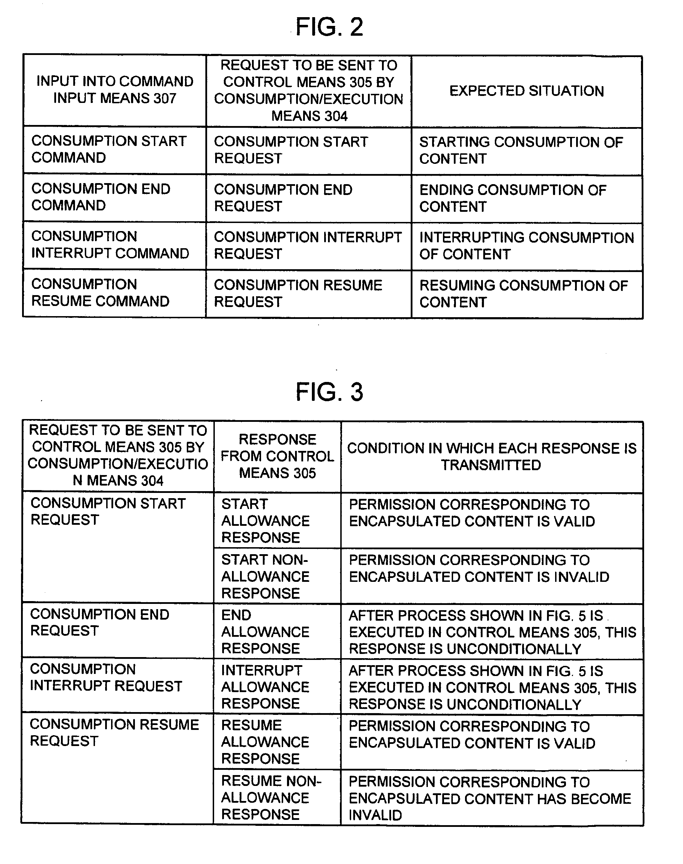

The consumption/execution means 304 outputs information indicating a request for the start, end, interrupt, and resume, and the encapsulated content stored by the content storage means 302 to the control means 305, based upon the command input into the command input means 306 by the user, and the encapsulated content selected by the user according to a predetermined correspondence relation. Fig. 2 is an explanatory view illustrating a correspondence relation between a command input into the command input means 306 by the user, and information that the consumption/execution means 304 outputs to the control means 305.

The control means 305 outputs a response to the consumption/execution means 304 according to a predetermined condition based upon the information input by the consumption/execution means 304. Fig. 3 is an explanatory view illustrating a response that the control means 305 outputs based upon the information input by the consumption/execution means 304, and its condition.

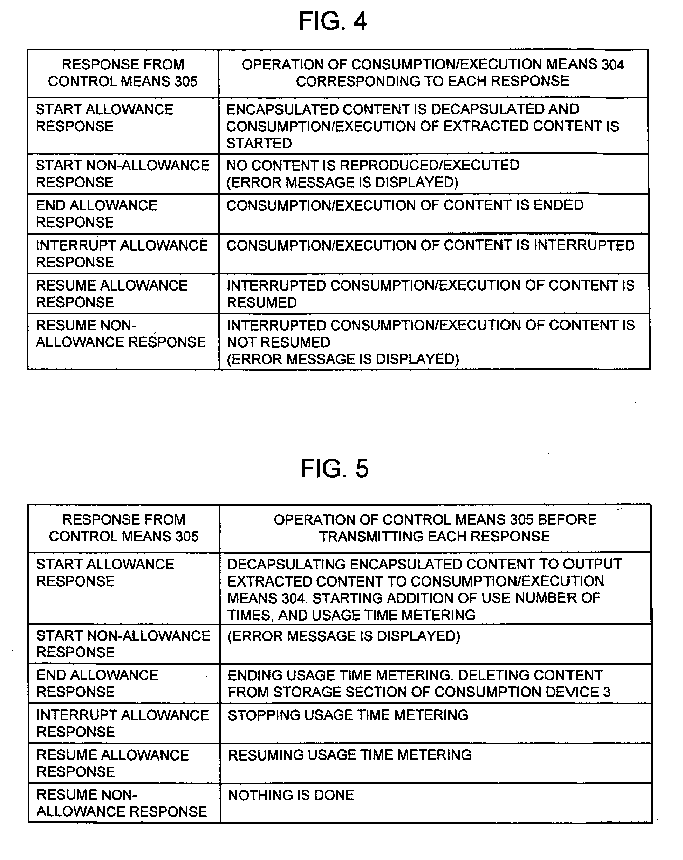

When the response is input, the consumption/execution means 304 performs an operation according to a predetermined correspondence relation. Fig. 4 is an explanatory view illustrating an operation that the consumption/execution means 304 performs for the input response. Additionally, the control means 305 performs a predetermined operation before outputting a response to the consumption/execution means 304. Fig. 5 is an explanatory view illustrating an operation that the control means 305 performs before outputting a response to the consumption/execution means 304. In accordance with an example shown in Fig. 5, for example, the control means 305 decapsulates the encapsulated content input by the consumption/execution means 304 to extract the content before outputting a start allowance response, and outputs the extracted content to the consumption/execution means 304. Herein, the so-called decapsulation signifies a process of converting the encapsulated content into the original meta-information and content, however in a case where one part or the entirety of data of the content was encrypted, in decapsulating the content, the control means 305 decodes the data thereof for restoration to original data.

When the user operates an operation section (not shown in the figure) of the consumption device 3 to specify the encapsulated content and inputs a consumption start command into the command input means 306, the consumption/execution means 304 extracts the encapsulated content specified by the user from the content storage means 302, and outputs the encapsulated content that was extracted, and information indicating a consumption start command to the control means 305. Additionally, when the user inputs the consumption start command of the encapsulated content, the command input means 306 may cause the display section (not shown in the figure) of the consumption device 3 to display the content ID including the meta-information of the encapsulated content stored by the content storage means 302, thereby to cause the user to select the encapsulated content of which the consumption the user requires to start.

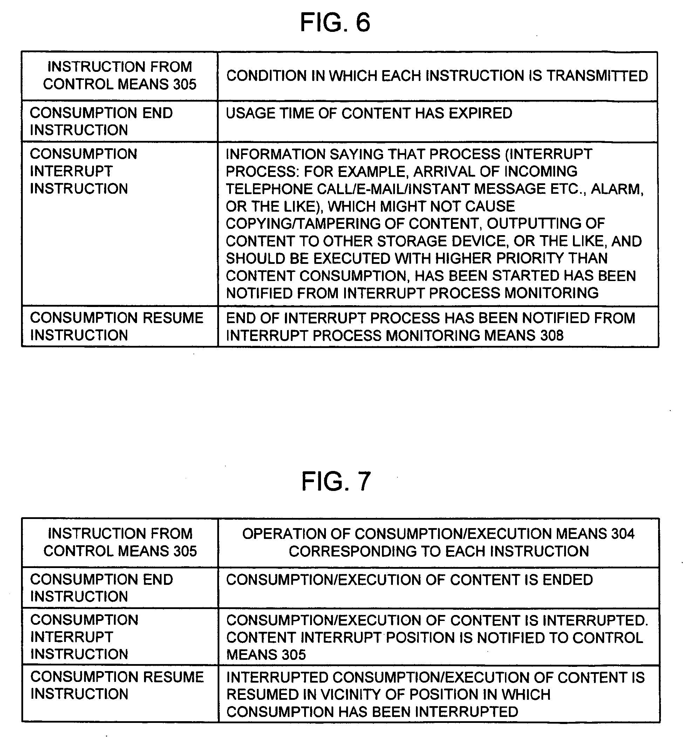

The control means 305 simultaneously inputs the content as well in inputting a start allowance response, whereby the consumption/execution means 304 starts the consumption of the input content. Further, in a case where the permission has expired during the content consumption in some cases, the interrupt process (the process that should be executed more preferentially than the content consumption) has been started in some cases, and the interrupted process has been ended in some cases, the control means 305 outputs a consumption end instruction, a consumption interrupt instruction, or a consumption resume instruction, respectively, whereas the consumption/execution means 304 performs an operation corresponding to each of predetermined instructions. Fig. 6 is an explanatory view illustrating the condition in which the control means 305 inputs each instruction into the consumption/execution means 304. Fig. 7 is an explanatory view illustrating an operation that the consumption/execution means 304 performs in the case that each instruction has been input.

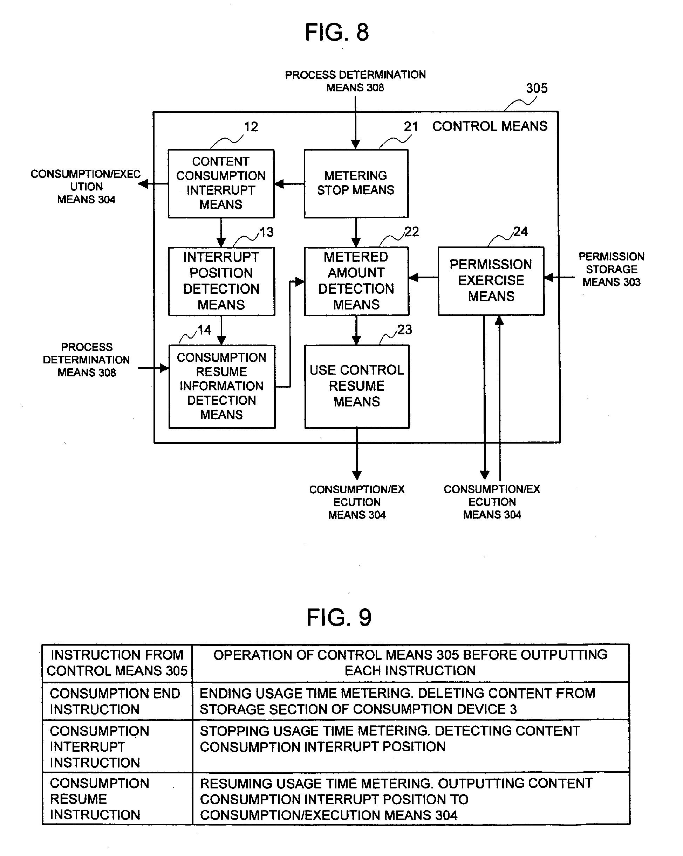

An internal configuration of the control means 305 will be explained by making a reference to the accompanied drawings. Fig. 8 is a block diagram illustrating one configuration example of the internal configuration of the control means 305.

The control means 305 includes: permission exercise means 24 for, after making a reference to the permission information corresponding to the content ID of the encapsulated content that the meta-information that the encapsulated content includes indicates, which has been stored by the permission storage means 303, drawing an conclusion as to which response is output to the consumption/execution means 304 based upon the condition shown in Fig. 3, and executing an operation shown in Fig. 5 corresponding to the determined response when information indicating a request for starting, ending, interrupting, and resuming the content consumption, and the encapsulated content are input from the consumption/execution means 304, outputting its response to the consumption/execution means 304, further transmitting a consumption end instruction to the consumption/execution means 304 in a case where the usage time of the content has expired, and executing an operation corresponding to the consumption end instruction; metering stop means 21 for, when it has been notified from the process determination means 308 that the interrupt process has been started, stopping the measurement of the metered amount of the content (for example, the measurement of the usage time of the content), and causing the storage section (not shown in the figure) of the consumption device 3 to store the amount used so far; content consumption interrupt means 12 for outputting a consumption interrupt instruction to the consumption/execution means 304 simultaneously with stopping the measurement of the metered amount; interrupt position detection means 13 for, based upon the information input by the consumption/execution means 304, detecting an interrupt position of the content consumption; consumption resume information detection means 14 for detecting information saying that the consumption of the content is resumed (for example, information indicating that the interrupt process has been ended) from the process determination means 308; metered amount detection means 22 for extracting the maximum metered amount of the content from the permission exercise means 24, extracting the amount used so far from the metering stop means 21, and calculating a difference between these metered amounts, thereby to calculate the remaining available content metered amount (remaining valid portion); and use control resume means 23 for resuming the measurement of the metered amount of the content to output a consumption resume instruction and information indicating the content consumption interrupt position to the consumption/execution means 304.

Fig. 9 is an explanatory view illustrating an operation corresponding to the instruction that the control means 305 outputs. In an example shown in Fig. 9, for example, when the process determination means 308 notifies the start and end of the interrupt process to the control means 305, the latter transmits a consumption instruction, an interrupt instruction or a consumption resume instruction to the consumption/execution means 304 responding to the situation of the notified interrupt process. In addition hereto, the control means 305 performs an operation shown in Fig. 9 corresponding to each of these instructions.

The process monitoring means 307 monitors all processes resident in OS (Operating System) that are going to be started or ended during the content consumption (in other words, after the control means 305 has output a start allowance response to the consumption/execution means 304).

The consumption device 3 pre-stores into the storage section a list of the processes that might cause copying or tampering of a content, outputting of a content to the other storage device, or the like (hereinafter, referred to as an unauthorized process. For example, the process of recording or displaying the memory temporally secured for the purpose of reproducing the content, and the forced end processes such as the process of interrupting a power source, the process of taking out an electric cell, and the process of warning for informing a remaining capacity of the electric cell), and the processes (interrupt process) causing no problem in the content copyright management but to be executed with a higher priority than the content consumption, for example, the process of receiving the incoming telephone call, E-mail, instant message, etc. and the process of an alarm. Table 1 is a table illustrating an example of the file format and the unauthorized process that correspond to the kind of the content. And, the process determination means 308 manages a list of the unauthorized processes and the interrupt processes in a format of being not tampered unauthorizedly from the outside. As a specific management method, for example, the method of storing the content into the memory having the encryption, the E-signature, and the tamper resistance, or the method of controlling an access to database having the list stored can be employed. And, when the process determination means 308 is notified of the start or end of any process from the process monitoring means 307, the former makes a reference to two lists of the unauthorized processes and the interrupt processes, and draws a conclusion as to which process, out of the unauthorized process, the interrupt process and the process other than these, its process is. And, in a case where the unauthorized process is going to be started, the process determination means 308 notifies its effect to the unauthorized process start suppression means 309. In a case where the interrupt process is going to be started or ended, the process determination means 308 notifies its effect to the control means 305.

**[Table 1]**

| Kind of the content | File format (example) | Unauthorized process |
|---|---|---|
| Music | mp3, wav, wma, etc. | Process of accessing a storage section of a sound card |
| Stationary image | jpeg, gif, bmp, etc. | Screen capture Process of accessing a storage section of a video card |
| Moving image | Mpeg2, Mpeg4, QuickTime, etc. | Screen capture Process of accessing a storage section of a video card Process of accessing a storage section of a sound card |
| Text | txt | Screen capture Process of accessing a storage section of a video card |

The consumption device 3 has a content consumption control program installed for: causing the process determination means 308 to execute a process determination process of determining whether or not the process that is going to be started during the content consumption is an interrupt process; causing the control means 305 to execute a control process of measuring the metered amount of the content, and when it is determined in the process determination process that the process that is going to be started during the content consumption is an interrupt process, causing the storage section to store the content amount used so far; causing the consumption/execution means 304 to execute a consumption/execution process of, when it is determined in the process determination process that the process that is going to be started is an interrupt process, interrupting the consumption of the content till the execution of the interrupt process is ended; and causing the control means 305 to execute a process, being a control process, of, when the execution of the interrupt process is ended, detecting the content metered amount stored in the storage section, thereby to cause the consumption/execution process to resume the content consumption responding to the detected metered amount of the content. Further, the content consumption control program may cause the control means 305 to execute a process of measuring the consumption time of the content as a measurement of the metered amount of the content, a process of, when the interrupt process is started, stopping the measurement of the consumption time of the content, and a process of, when the execution of the interrupt process is ended, resuming the measurement of the consumption time of the content, each of which is a control process.

Further, the consumption device 3 has a content consumption control program installed for: causing the process determination means 308 to execute a process determination process of determining whether the process that is going to be started during the content consumption is an unauthorized process, an interrupt process or a process other than the unauthorized process and the interrupt process; causing the consumption/execution means 304 to execute a consumption/execution process of, when it is determined in the process determination process that the process that is going to be started is an interrupt process, interrupting the consumption of the content till the execution of the interrupt process is ended; and causing the unauthorized process start suppression means 309 to execute an unauthorized process start suppression process of, when it is determined in the process determination process that the process that is going to be started is an unauthorized process, suppressing the start of its process. Additionally, when the distribution side distributes the content with the consumption time of the content limited, the content consumption control program may cause the control means 305 to execute a process of measuring the consumption time of the content, a process of, when the interrupt process is started, stopping the measurement of the consumption time of the content, and a process of, when the interrupt process is ended, resuming the measurement of the consumption time of the content, each of which is a control process.

The consumption device 3 has a content consumption control program installed for: causing the process determination means 308 to execute a process determination process of determining whether the process that is going to be started during the content consumption is an unauthorized process, an interrupt process, or a process other than the unauthorized process and the interrupt process; causing the consumption/execution means 304 to execute a consumption/execution process of, when it is determined in the process determination process that the process that is going to be started is an interrupt process, interrupting the consumption of the content till the execution of the interrupt process is ended; and causing the control means 305 to execute a process of non-encrypting an encrypted content, thereby to cause the storage section to store it, a process of, when it is determined in the process determination process that the process that is going to be started is an unauthorized process, causing the consumption/execution process to forcibly end the consumption of the content, and a process of deleting data of the non-encrypted content from the storage section, each of which is a control process. When the distribution side distributes the content with the consumption time of the content limited, the content consumption control program may cause the control means 305 to execute a process of measuring the consumption time of the content, a process of, when the interrupt process is started, stopping the measurement of the consumption time of the content, and a process of, when the interrupt process is ended, resuming the measurement of the consumption time of the content, each of which is a control process.

The permission information distribution server 160 has a permission information distribution program installed for causing the permission information distribution means 161 to execute a permission information distribution process of distributing permission information, being information including a list of the interrupt processes, to the consumption device (content consumption terminal) 3, being a terminal for reproducing the content.

Further, the permission information distribution server 160 has a permission information distribution program installed for causing the permission information distribution means 161 to execute a permission information distribution process of distributing permission information, being information including a list of the unauthorized processes and a list of the interrupt processes, to the consumption device (content consumption terminal) 3, being a terminal for reproducing the content.

In a case where the unauthorized process is going to be started, the unauthorized process start suppression means 309 suppresses the start of its process. Specifically, for example, the consumption device 3, which has UNIX (Registered Trademark) or Linux (Registered Trademark) installed, executes a kill command, and the consumption device 3, which has Windows (Registered Trademark), executes a Ctrl-C command. Further, the unauthorized process start suppression means 309 may delete the content from the storage section of the consumption device 3 in a case where the unauthorized process is going to be started.

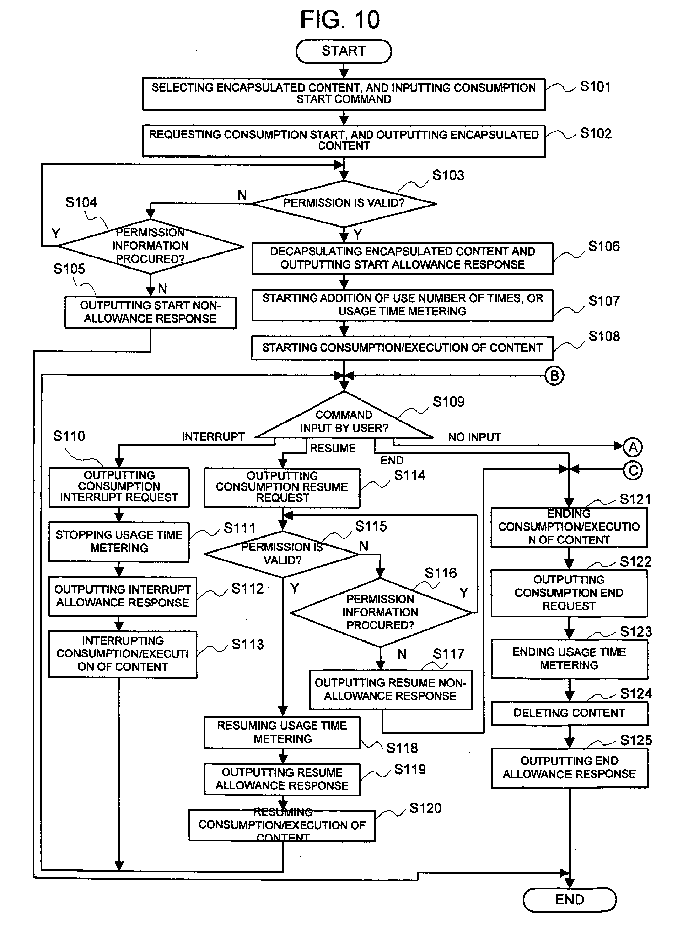

Next, an operation of this embodiment will be explained. Fig. 10 is a flowchart for explaining an operation of the first embodiment.

The user operates the operation section of the consumption device 3, selects a specific encapsulated content from among the encapsulated contents stored by the content storage means 302, and inputs a consumption start command into the command input means 306 (step S101). The command input means 306 outputs the input consumption start command and information for specifying the encapsulated content to the consumption/execution means 304.

The consumption/execution means 304 extracts the encapsulated content specified by the user from the content storage means 302, and outputs the encapsulated content that was extracted, and a consumption start request, being a request corresponding to the input consumption start command, to the control means 305 (step S102).

The control means 305 makes a reference to the meta-information of the encapsulated content that was input, thereby to specify permission information corresponding to the content ID that the meta-information includes. And, the control means 305 extracts the specified permission information from the permission storage means 303, makes an reference to the permission information, and determines whether or not the permission of the content that the permission information indicates is valid (step S103). The control means 305 causes the display section of the consumption device 3 to display information for urging the user to procure new permission information in a case where the permission of the content that the permission information indicates is not valid.

In a case where the user procures the permission information (step S104), the control means 305 executes the step S103 after the user procures the permission information. In a case where the user does not procure the permission information (step S104), however, the control means 305 outputs a start non-allowance response to the consumption/execution means 304 (step S105), and ends the operation as it is. At this time, the control means 305 may cause the display section of the consumption device 3 to display an error message.

In a case where the permission that the permission information indicates is valid in the step S103, the control means 305 decapsulates the encapsulated content, thereby to extract the content, and outputs the extracted content and a start allowance response to the consumption/execution means 304 (step S106). And, the control means 305 operates an addition of the use number of times in a case where it is taking the use number-of-times control of the content, and starts the measurement of the usage time in a case where it is taking the usage time control of the content (step S107).

The consumption/execution means 304 starts the consumption or execution of the content when the content and the start allowance response are input (step S108).

When the user operates the operation section of the consumption device 3 during the content consumption, thereby to input a command of the interrupt, resume, or end into the command input means 306, the consumption/execution means 304 performs the following operation responding to its command (step S109).

In a case where the interrupt command has been input into the command input means 306 in the step S109, the consumption/execution means 304 outputs a consumption interrupt request to the control means 305 (step S110). When the consumption interrupt request is input, the control means 305 stops the measurement of the usage time in a case where it is taking the usage time control of the content (step S111), and outputs an interrupt allowance response to the consumption/execution means 304 (step S112). When the interrupt allowance response is input, the consumption/execution means 304 interrupts the consumption or execution of the content (step S113).

In a case where the resume command has been input into the command input means 306 in the step S109, the consumption/execution means 304 outputs a consumption resume request to the control means 305 (step S114). When the consumption resume request is input, the control means 305 determines whether or not the permission that the permission information to which a reference was made in the step S103 indicates is valid (step S115). In a case where the permission of the content that the permission information indicates is not valid, the control means 305 causes the display section of the consumption device 3 to display information for urging the user to procure new permission information. In a case where the user procures the permission information (step S116), the control means 305 executes the step S115 after the user procures the permission information. In a case where the user does not procure the permission information (step S116), however, the control means 305 outputs a resume non-allowance response to the consumption/execution means 304 (step S117), and executes an operation identical to that of the case that an end command to be later described has been input. At this moment, the control means 305 may cause the display section of the consumption device 3 to display an error message. In a case where the permission that the permission information indicates is valid in the step S115, the control means 305 resumes the measurement of the usage time in a case where it is taking the usage time control of the content (step S118), and outputs a resume allowance response to the consumption/execution means 304 (step S119). When the resume allowance response is input, the consumption/execution means 304 resumes the consumption or execution of the content (step S120).

In a case where the end command has been input into the command input means 306 in the step S109, the consumption/execution means 304 ends the consumption or execution of the content (step S121), and outputs a consumption end request to the control means 305 (step S122). When the consumption end request is input, the control means 305 ends the measurement of the usage time in a case where it is taking the usage time control of the content (step S123), deletes data of the content stored by the storage section of the consumption device 3 (step S124), and outputs an end allowance response to the consumption/execution means 304 (step S125). When the end allowance response is input, the consumption/execution means 304 returns to the status prior to that of the step S101.

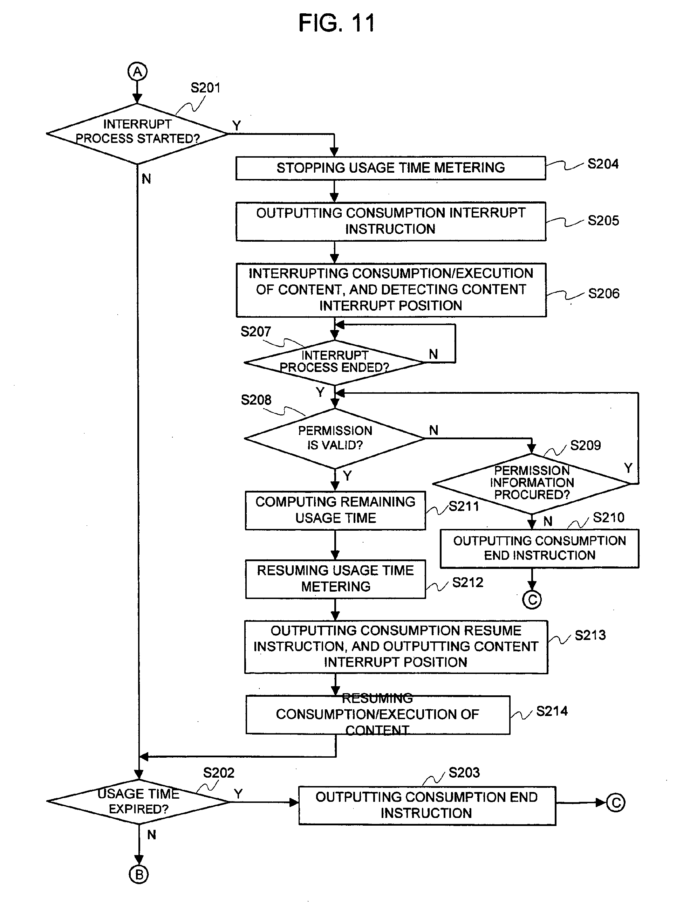

An operation in the case that no command is input in the step S109 will be explained. Fig. 11 is a flowchart for explaining the operation in the case that no command is input during the consumption of the content.

In this case, the control means 305 performs the following operation responding to existence of the start of the interrupt process that the process determination means 308 notifies hereto. At first, when there is no start of the interrupt process (step S201), in a case where the permission that the permission information to which a reference was made in the step S103 indicates includes the condition of the usage time, the control means 305 determines whether or not the usage time has expired (step S202). In a case where the usage time has expired, the control means 305 outputs a consumption end instruction to the consumption/execution means 304 (step S203), and causes the latter to execute the step S121. In a case where the usage time has not expired, the control means 305 returns to the step S109.

Further, when there is the start of the interrupt process (when the process determination means 308 has determined that the interrupt process is going to be started), in a case where the control means 305 is taking the usage time control of the content (this includes all controls of using the usage time that has passed since starting the consumption, for example, a control of limiting the total usage time, a control of counting up the consumption number of times as being one time in the case that a constant usage time or more has passed, and so on), it stops the measurement of the usage time (step S204), and outputs a consumption interrupt instruction to the consumption/execution means 304 (step S205). When the consumption interrupt instruction is input, the consumption/execution means 304 interrupts the consumption or execution of the content, and the interrupt position detection means 13 of the control means 305 detects a consumption interrupt position of the content (step S206). And, when the process determination means 308 notifies the end of the interrupt process to the control means 305 (step S207), it is determined whether or not the permission that the permission information to which a reference was made in the step S103 indicates is valid (step S208). In a case where the permission of the content that the permission information indicates is not valid, the control means 305 causes the display section of the consumption device 3 to display information for urging the user to procure new permission information. In a case where the user procures the permission information (step S209), the control means 305 executes the step S208 after the user procures the permission information. However, in a case where the user does not procure the permission information, after the control means 305 transmits a consumption end instruction to the consumption/execution means 304 (step S210), it returns to the step S121. In a case where the permission that the permission information indicates is valid in the step S208, the control means 305 calculates the remaining usage time in a case where it is taking the usage time control of the content (step S211), resumes the measurement of the usage time (step S212), specifies an interrupt position of the content consumption based upon the remaining usage time, and outputs the specified interrupt position of the content consumption and a consumption resume instruction to the consumption/execution means 304 (step S213). When the consumption resume instruction and the interrupt position of the content consumption are input, the consumption/execution means 304 resumes the consumption or execution of the content at the interrupt position of the content consumption (step S214).

Additionally, there is also the case of unconditionally permitting the resume of the consumption and execution of the content at the time of resuming the consumption of the content or at the time that the incoming is ended. Namely, this is just the case that the permission that the permission information indicated was valid at the time of starting the content consumption, and the case such that the copyright management policy saying that the permission is valid till the consumption of the content is ended has been set. The embodiment of the present invention does not presume that such a policy is set, whereby the operations of step S115, step S116, step S117, step S208, step S209, and step S210 are described; however these operations may be omitted in a case of having set the above-mentioned copyright management policy.

Next, the first embodiment will be explained by listing a specific example. A configuration of the specific example of the first embodiment is similar to that of the first embodiment shown in Fig. 1, so codes identical to that of Fig. 1 are affixed and an explanation is omitted.

In this example, the following two kinds of permissions are exemplified as the permission that the permission information corresponding to a specific encapsulated content indicates, and explained by making a reference to flowcharts of Fig. 10 and Fig. 11: permission ( 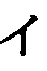 ): the use period of time is December 31, 2003 23:59:59, and yet the use number of times is limited to five; and
permission (□): the use period of time is December 31, 2003 23:59:59, and yet the accumulated usage time is limited to five minutes.

At first, now think about the case that the permission corresponding to the encapsulated content is the permission ( 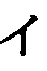 ), and the condition storage means 303 has already stored the permission information indicating the permission ( 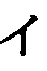 ). At this time, in the step S103 of Fig. 10, the control means 305 checks whether or not the use period of time has become due at the present time, and checks whether or not the number of times of the consumption so far is 5 or less. And, in a case of satisfying both conditions, the control means 305 executes the step S106. In a case where one of the permissions is not satisfied, or both are not satisfied, however, the control means 305 causes the display section of the consumption device 3 to display information for urging the user to procure new permission information.

When the user procures the permission information newly, the control means 305 checks again in the step S103 whether or not it is valid, however it is acceptable that the control means 305 does not return to the step S103, but executes the step S106 so long as it is guaranteed that the permission information procured by the user is clearly valid (for example, in a case of making a configuration so that the user can select only the valid permission information when the user procures new permission information in some cases, the user automatically downloads only the valid permission information in some cases, or the like).

In the step S107, a limit to the use number of times is included in the permission ( 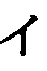 ), whereby the control means 305 adds the use number of times by one (1), and causes the storage section of the consumption device 3 to store its use number of times in a format of being not tampered by a malicious user. As an example of the technique for the storage, for example, employment of the encryption, the anti-tamper device, and the signature is thinkable. In causing the storage section of the consumption device 3 to store the permission, one of the use number of times so far and the remaining use number of times is stored. Further, a limit to the usage time is not included in the permission ( 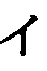 ), whereby the control means 305 does not measure the usage time. Further, after starting the content consumption, the control means 305 omits each operation of the step S111, step S118, step S123, step S204, step S211, and the step S212 because a limit to the usage time is not included in the permission ( 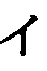 ).

Additionally, in a case of having set the condition such as the permission ( 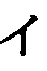 ), at the moment that the control means 305 has checked validity of the permission at the time that the consumption is resumed or at the time that the incoming is ended, as is often the case, the right entitled by the permission has already expired (in the step S115 and the step S208). This case is just the case that the use period of time has become due at the time of resuming the consumption even though it did not become due at the time of starting the consumption. In this case, the control means 305 causes the display section of the consumption device 3 to display information for urging the user to procure new permission information. In this example, in a case where the permission is the condition ( 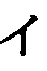 ), the content can be reproduced or executed five times on the assumption that the consumption number of times is counted up as being one time when the consumption or execution of the content has been ended since the start thereof unless the use period of time becomes due in the halfway.

Next, think about the case that the permission corresponding to the encapsulated content is the permission (□), and the condition storage means 303 has already stored the permission information indicating the permission (□). At this time, in the step S103 of Fig. 10, the control means 305 checks whether or not the use period of time has due at the present time, and checks whether or not the accumulated sum of the consumption time so far is 5 minutes or less. And, in a case of satisfying both conditions, the control means 305 executes the step S106. In a case where one of the permissions is not satisfied, or both are not satisfied, however, the control means 305 causes the display section of the consumption device 3 to display information for urging the user to procure new permission information.

When the user procures the permission information newly, the control means 305 checks again in the step S103 whether or not it is valid, however it is acceptable that the control means 305 does not return to the step S103, but executes the step S106 so long as it is guaranteed that the permission information procured by the user is clearly valid (for example, in a case of making a configuration so that the user can select only the valid permission information when the user procures new permission information in some cases, the user automatically downloads the valid permission information in some cases, or the like).

In the step S107, a limit to the usage time is included in the permission (□), whereby the control means 305 starts the measurement of the usage time. More specifically, the control means 305 causes a timer (not shown in the figure) of the consumption device 3 to start the measurement of the usage time. Additionally, the control means 305 may include the timer. Further, after starting the content consumption, the control means 305 executes each operation of the step S111, the step S118, the step S123, the step S204, the step S211, the step S212, the step S202, and the step S203 because a limit to the usage time is included in the permission (□).

At this time, the control means 305 causes the timer of the consumption device 3 to suspend the measurement of the usage time in the step S111, the step S123, and the step S204, and simultaneously therewith, adds the usage time after starting the content consumption and after resuming the content consumption, respectively, to the sum of the usage time accumulated till the present time. Further, the control means 305 causes the timer of the consumption device 3 to start the measurement of the usage time in the step S118, and the step S212. The control means 305 executes the operation of the step S203 when the sum of the usage times accumulated so far reaches five minutes in the step S202.

Additionally, in a case of having set the condition such as the permission (□), at the moment that the control means 305 checks validity of the permission at the time that the consumption is resumed or at the time that the incoming is ended, as is often the case, the right entitled by the permission has already expired (in the step S115 and the step S208). This case is just the case that the use period of time has become due at the time of resuming the consumption even though it did not become due at the time of starting the consumption. In this case, the control means 305 causes the display section of the consumption device 3 to display information for urging the user to procure new permission information. In this example, in a case where the permission is the condition (□), the content can be reproduced or executed till the accumulated sum of the consumption or execution times of the content reaches five minutes unless the use period of time becomes due in the halfway.

As mentioned above, this embodiment makes it possible to accurately take the use control of the content because the metering stop means 21, the metered amount detection means 22, and the use control resume means 23 temporally stop the measurement of the metered amount of the content during the start of the interrupt process. Further, in this embodiment, the process determination means 308 determines the start and end of the unauthorized process, and the unauthorized process start suppression means 309 suppresses the start of the unauthorized process, or deletes the content from the storage section of the consumption device 3. For this, it is possible to prevent the unjustness accompanied by an attempt to start the unauthorized process during the content consumption by the user even though the mobile telephone terminal is adapted to have an open system/a high functionality.

### Embodiment 2

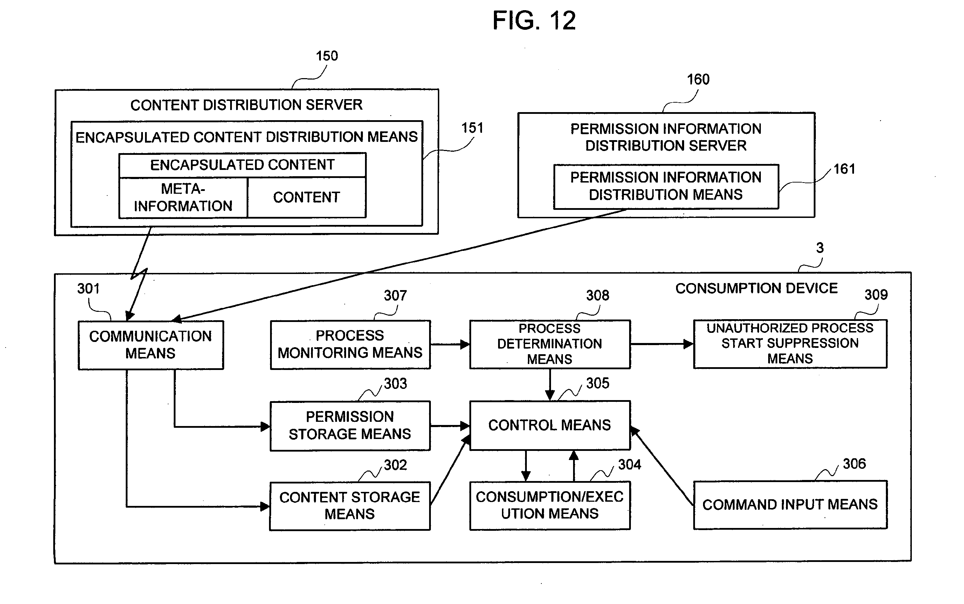

The second embodiment will be explained by making a reference to the accompanied drawings. Fig. 12 is a block diagram illustrating one configuration example of the second embodiment of the present invention.

The second embodiment of the present invention differs from the first embodiment of the present invention shown in Fig. 1 in a point that the command input means 306 inputs a command and information for specifying the encapsulated content into the control means 305, and that the control means 305 extracts the encapsulated content stored by the content storage means 302. For this, the operation of each means other than the consumption/execution means 304 and the permission exercise means 24 of the control means 305 is similar to that of the first embodiment of the present invention, so an explanation is omitted.

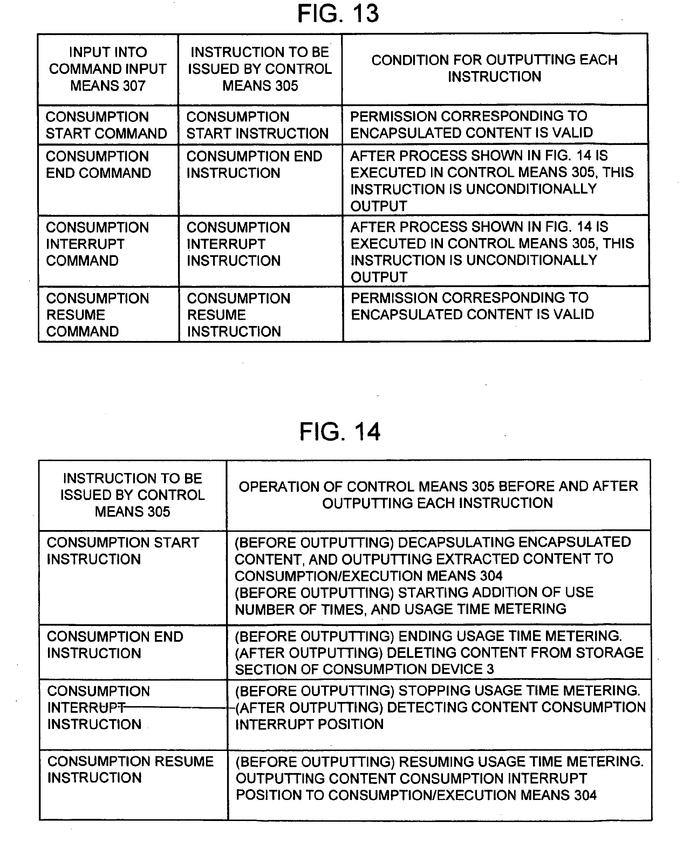

The permission exercise means 24 of the control means 305 makes a reference to the permission information that corresponds to information for specifying the encapsulated content input by the command input means 306, which the permission storage means 303 has stored, thereby to determines which instruction is output to the consumption/execution means 304, based upon the command input into the command input means 306 by the user, and the information (content ID) for specifying the encapsulated content, and outputs the determined instruction to the consumption/execution means 304. Fig. 13 is an explanatory view illustrating a correspondence relation between a command input into the command input means 306 by the user and an instruction that the control means 305 outputs to the consumption/execution means 304. The control means 305 performs a predetermined operation before or after outputting an instruction. Fig. 14 is an explanatory view for explaining a pre-decided operation that the control means 305 performs before or after outputting the instruction.

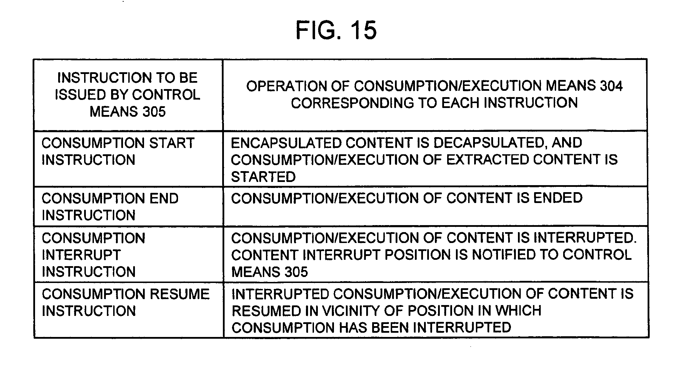

Fig. 15 is an explanatory view illustrating an operation that the consumption/execution means 304 performs corresponding to the instruction input by the control means 305. When the control means 305 inputs the instruction shown in the left column of Fig. 15, the consumption/execution means 304 performs an operation corresponding hereto. For example, in a case where the control means 305 inputs the consumption start instruction into consumption/execution means 304, the content that is obtained by decapsulating and extracting the encapsulated content by the control means 305 is also input simultaneously into the consumption/execution means 304, whereby the consumption/execution means 304 starts the consumption of this content.

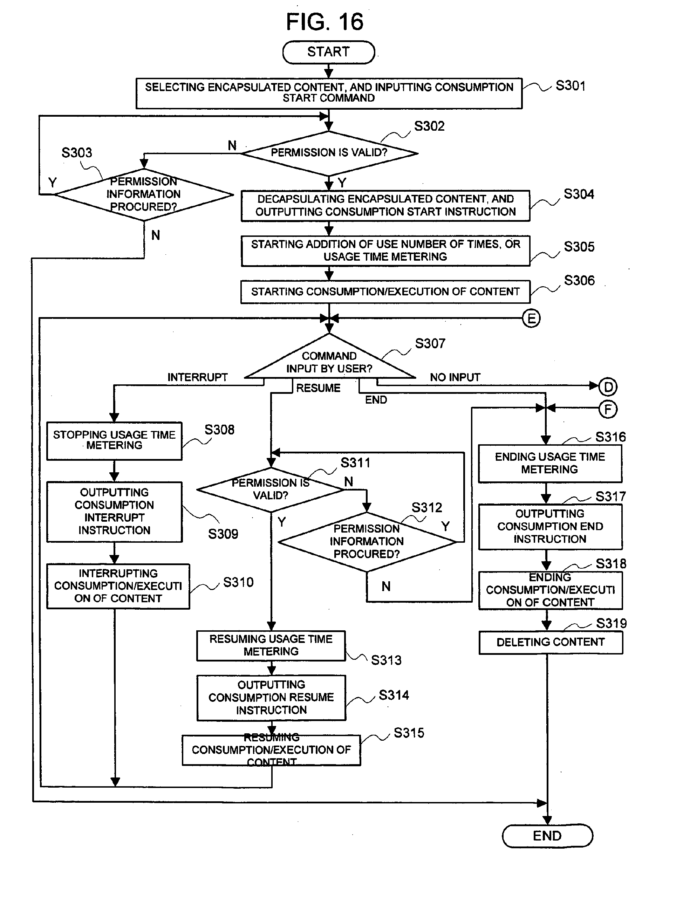

Next, an operation of this embodiment will be explained. Fig. 16 is a flowchart for explaining an operation of the second embodiment.

The user operates the operation section of the consumption device 3, thereby to select a specific encapsulated content from among the encapsulated contents stored by the content storage means 302, and inputs a consumption command into the command input means 306 (step S301). The command input means 306 outputs the input consumption start command and information for specifying the encapsulated content to the control means 305.

The control means 305 extracts the encapsulated content from content storage means 302 based upon the input information for specifying the encapsulated content, and makes a reference to the meta-information of the encapsulated content that was extracted, thereby to specify permission information corresponding to the content ID that the meta-information includes. And, the control means 305 extracts the specified permission information from the permission storage means 303, and determines whether or not the permission of the content that the extracted permission information indicates is valid (step S302). In a case where the permission of the content that the permission information indicates is not valid, the control means 305 causes the display section of the consumption device 3 to display information for urging the user to procure new permission information.

In a case where the user procures the permission information (step S303), the control means 305 executes the step S302 after the user procures the permission information. In a case where the user does not procure the permission information (step S303), however, the control means 305 ends the operation as it is.

In a case where the permission that the permission information indicates is valid in the step S302, the control means 305 decapsulates the encapsulated content, thereby to extract the content, and outputs the extracted content and a consumption start instruction to the consumption/execution means 304 (step S304). And, the control means 305 operates an addition of the use number of times in a case where it is taking the use number-of-times control of the content, and starts the measurement of the usage time in a case where it is taking the usage time control (step S305).

The consumption/execution means 304 starts the consumption or execution of the content when the content and the consumption start instruction are input (step S306).

When the user operates the operation section of the consumption device 3 during the content consumption, thereby to input a command of the interrupt, resume, or end into the command input means 306, the consumption/execution means 304 performs the following operation responding to its command (step S307).

In a case where the interrupt command has been input into the command input means 306 in the step S307, the control means 305 stops the measurement of the usage time in a case where it is taking the usage time control of the content (step S308) and outputs a consumption interrupt instruction to the consumption/execution means 304 (step S309). When the consumption interrupt instruction is input, the consumption/execution means 304 interrupts the consumption or execution of the content (step S310).

In a case where the resume command has been input into the command input means 306 in the step S307, the control means 305 determines whether or not the permission that the permission information to which a reference was made in the step S302 indicates is valid (step S311). In a case where the permission of the content that the permission information indicates is not valid, the control means 305 causes the display section of the consumption device 3 to display information for urging the user to procure new permission information. In a case where the user procures the permission information (step S312), the control means 305 executes the step S311 after the user procures the permission information. In a case where the user does not procure the permission information (step S312), however, the control means 305 executes an operation identical to that of the case that an end command to be later described has been input. When the permission that the permission information indicates is valid in the step S311, the control means 305 resumes the measurement of the usage time in a case of where it is taking the usage time control of the content (step S313), and outputs a consumption resume instruction to the consumption/execution means 304 (step S314). When the consumption resume instruction is input, the consumption/execution means 304 resumes the consumption or execution of the content (step S315).

In a case where the end command has been input into the command input means 306 in the step S307, the control means 305 ends the measurement of the usage time in a case where it is taking the usage time control of the content (step S316), and outputs a consumption end instruction to the consumption/execution means 304 (step S317). When the consumption end instruction is input, the consumption/execution means 304 ends the consumption or execution of the content (step S318). And, the control means 305 deletes data of the content stored by the storage section of the consumption device 3 (step S319), and returns to the status prior to that of the step 301.

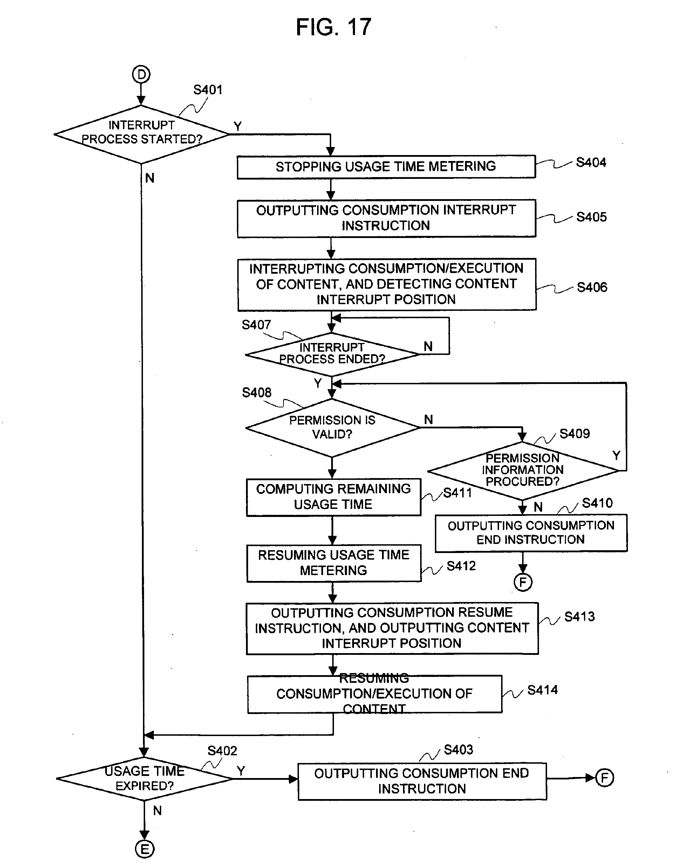

An operation in the case that no command is input in the step S307 will be explained. Fig. 17 is a flowchart for explaining the operation in the case that no command is input during the consumption of the content.

In this case, the control means 305 performs the following operations responding to existence of the start of the interrupt process that the process determination means 308 notifies hereto. At first, when there is no start of the interrupt process (step S401), in a case where the permission that the permission information to which a reference was made in the step S302 indicates includes the condition of the usage time, the control means 305 determines whether or not the usage time has expired (step S402). In a case where the usage time has expired, the control means 305 outputs a consumption end instruction to the consumption/execution means 304 (step S403), and causes the latter to execute the step S316. In a case where the usage time has not expired, the control means 305 returns to the step S307.

Further, when there is the start of the interrupt process (when the process determination means 308 has determined that the interrupt process is going to be started), in a case where the control means 305 is taking the usage time control of the content, it stops the measurement of the usage time (step S404), and outputs a consumption interrupt instruction to the consumption/execution means 304 (step S405). When the consumption interrupt instruction is input, the consumption/execution means 304 interrupts the consumption or execution of the content, and the interrupt position detection means 13 of the control means 305 detects a consumption interrupt position of the content (step S406). And, when the process determination means 308 notifies the end of the interrupt process to the control means 305 (step S407), it is determined whether or not the permission that the permission information to which a reference was made in the step S302 indicates is valid (step S408). In a case where the permission of the content that the permission information indicates is not valid, the control means 305 causes the display section of the consumption device 3 to display information for urging the user to procure new permission information. In a case where the user procures the permission information (step S409), the control means 305 executes the step S408 after the user procures the permission information. However, in a case where the user does not procure the permission information, after the control means 305 transmits a consumption end instruction to the consumption/execution means 304 (step S410), it returns to the step S316. In a case where the permission that the permission information indicates is valid in the step S408, the control means 305 calculates a remaining usage time in a case where it is taking the usage time control of the content (step S411), resumes the measurement of the usage time (step S412), specifies an interrupt position of the content consumption based upon the remaining usage time, and outputs the specified interrupt position of the content consumption and a consumption resume instruction to the consumption/execution means 304 (step S413). When the consumption resume instruction and the interrupt position of the content consumption are input, the consumption/execution means 304 resumes the consumption or execution of the content at the interrupt position of the content consumption (step S414).

Additionally, there is also the case of unconditionally permitting the resume of the consumption and execution of the content at the time of resuming the consumption of the content or at the time that the incoming is ended. Namely, this is just the case the permission that the permission information indicated was valid at the time of starting the content consumption, and the case such that the copyright management policy saying that the permission is valid till the consumption of the content is ended has been set. The embodiment of the present invention does not presume that such a policy is set, whereby the operations of step S311, step S312, step S408, step S409, and step S410 are described; however these operations may be omitted in a case of having set the above-mentioned copyright management policy.

As mentioned above, in accordance with this embodiment, an effect similar to that of the first embodiment can be obtained.

### Embodiment 3

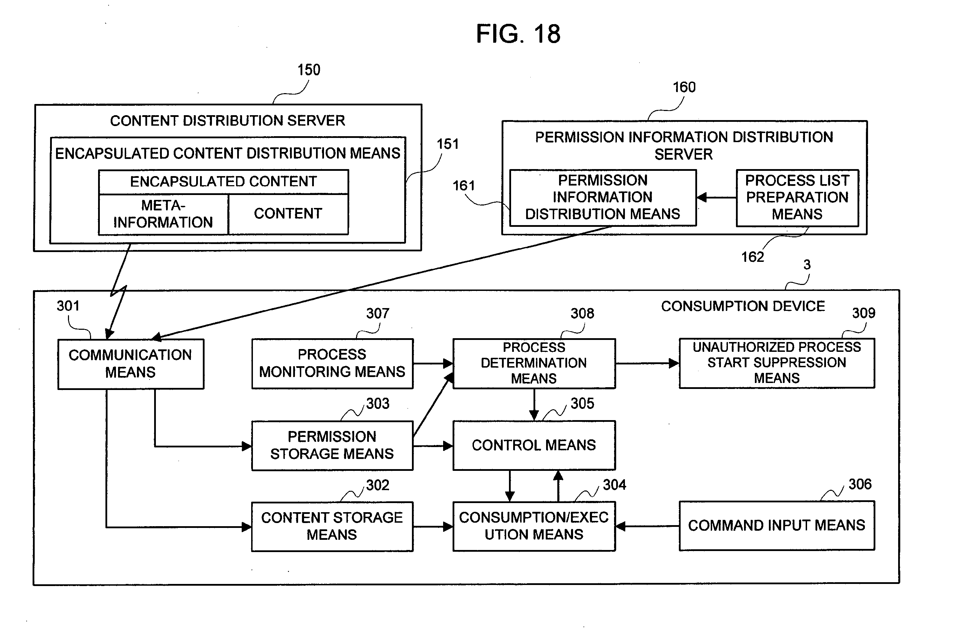

The third embodiment will be explained by making a reference to the accompanied drawings. Fig. 18 is a block diagram illustrating one configuration example of the third embodiment of the present invention.

The third embodiment of the present invention differs from the first embodiment in a point that the permission information distribution server 160 includes a process list preparation means 162 for preparing a list of the unauthorized processes and a list of the interrupt processes, that the permission information includes one part or an entirety of a list of the unauthorized processes and a list of the interrupt processes prepared by the process list preparation means 162, and that the process determination means 308 makes a reference to these lists. The other configuration is similar to that of the first embodiment, so an explanation is omitted.

The process list preparation means 162 prepares a list of the unauthorized processes and a list of the interrupt processes responding to software installed in the consumption device 3, and the kind of the content that the content distribution server 150 distributes, and outputs the prepared lists to the permission information distribution means 161. The permission information distribution means 161 distributes permission information including the lists prepared by the process list preparation means 162 to the consumption device 3.

The process determination means 308 monitors all processes resident in OS that are going to be started or ended, and in a case where the process that one of a list of the interrupt processes that permission information includes, and a list of the interrupt processes stored by the storage section includes, or the process that both lists include is going to be started or ended, the process determination means 308 notifies its effect to the control means 305. Further, in a case where the process that one of a list of the unauthorized processes that the permission information includes, and a list of the unauthorized processes stored by the storage section includes, or the process that both lists include is going to be started during the content consumption, the process determination means 308 notifies its effect to the unauthorized process start repression means 309.

The consumption device 3 has a content consumption control program installed for: causing the process determination means 308 to execute a process determination process of making a reference to the permission information stored by the permission storage means 303, thereby to determine whether or not the process that is going to be started during the content consumption is an interrupt process; and causing the consumption/execution means 304 to execute a consumption/execution process of, when it is determined in the process determination process that the process that is going to be started is an interrupt process, interrupting the consumption of the content till the execution of the interrupt process is ended. Further, when the distribution side distributes the content with the consumption time of the content limited, the content consumption control program may cause the control means 305 to execute a process of measuring the consumption time of the content, a process of, when the interrupt process is started, stopping the measurement of the consumption time of the content, and a process of, when the execution of the interrupt process is ended, resuming the measurement of the consumption time of the content, each of which is a control process.

Further, the consumption device 3 has a content consumption control program installed for: causing the process determination means 308 to execute a process determination process of making a reference to the permission information stored by the permission storage means 303, thereby to determine whether the process that is going to be started during the content consumption is an unauthorized process, an interrupt process, or a process other than the unauthorized process and the interrupt process; causing the consumption/execution means 304 to execute a consumption/execution process of, when it is determined in the process determination process that the process that is going to be started is an interrupt process, interrupting the consumption of the content till the execution of the interrupt process is ended; and causing the unauthorized process start repression means 309 to execute an unauthorized process start suppression process of, when it is determined in the process determination process that the process that is going to be started is an unauthorized process, suppressing the start of its process.

Further, the consumption device 3 has a content consumption control program installed for: causing the process determination means 308 to execute a process determination process of making a reference to the permission information stored by the permission storage means 303, thereby to determine whether the process that is going to be started during the content consumption is an unauthorized process, an interrupt process, or a process other than the unauthorized process and the interrupt process; causing the consumption/execution means 304 to execute a consumption/execution process of, when it is determined in the process determination process that the process that is going to be started is an interrupt process, interrupting the consumption of the content till the execution of the interrupt process is ended; and causing the control means 305 to execute a process, being a control process, of non-encrypting an encrypted content, thereby to causes the storage section to store it, and when it is determined in the process determination process that the process that is going to be started is an unauthorized process, causing the consumption/execution process to forcibly end the consumption of the content, thereby to delete data of the non-encrypted content from the storage section. In addition hereto, when the distribution side distributes the content with the consumption time of the content limited, the content consumption control program may cause the control means 305 to execute a process of measuring the consumption time of the content, a process of, when the interrupt process is started, stopping the measurement of the consumption time of the content, and a process of, when the interrupt process is ended, resuming the measurement of the consumption time of the content, each of which is a control process.

The permission information distribution server 160 has a permission information distribution program installed for causing the permission information distribution means 161 to execute a permission information distribution process of distributing permission information, being information including a list of the interrupt processes, to the consumption device (content consumption terminal) 3, being a terminal for reproducing the content. Further, the permission information distribution program may cause the process list preparation means 162 to execute a process list preparation process of preparing a list of the interrupt processes based upon the program installed in the consumption device (content consumption terminal) 3, and may cause the permission information distribution means 161 to execute a process, being a permission information distribution process, of distributing the permission information including a list of the interrupt processes prepared in the process list preparation process.

Further, the permission information distribution server 160 has a permission information distribution program installed for causing the permission information distribution means 161 to execute a permission information distribution process of distributing permission information, being information including a list of the unauthorized processes and a list of the interrupt processes, to the consumption device (content consumption terminal) 3, being a terminal for reproducing the content. In addition hereto, the permission information distribution program may cause the process list preparation means 162 to execute a process list preparation process of preparing a list of the unauthorized processes and a list of the interrupt processes based upon the program installed in the consumption device (content consumption terminal) 3, and may cause the permission information distribution means 161 to execute a process, being a permission information distribution process, of distributing the permission information including a list of the unauthorized processes and a list of the interrupt processes prepared in the process list preparation process to the consumption device (content consumption terminal) 3.

Next, an operation of the third embodiment will be explained. In the third embodiment, before the communication means 301 downloads the permission information, it notifies to the permission information distribution server 160 the details of the process that the software installed in the consumption device 3 executes. The process list preparation means 162 of the permission information distribution server 160 automatically prepares a list of the unauthorized processes and a list of the interrupt processes based upon the kind of the content to be distributed by the content distribution server 150, which corresponds to the permission information. For example, operating the process of the screen capture for the content, which is a music content (for example, in a case of having the format such as an PM3 (MPEG (Motion Picture Experts Group)-1 Audio Layer-3) format), does not give rise to a copyright infringement, whereby such a process is not added to a list of the unauthorized processes. However, such a process of accessing a storage section of a sound card, which might infringe the copyright, is added to a list of the unauthorized processes. Specifically, such a process that corresponds to the kind of the content and the file format shown in an example of Table 1 is added to a list of the unauthorized processes. Further, the content distribution server 150 may transmit to the permission information distribution server 160 information saying that consent to outputting the content, which has been format-converted, to a specific DRM (Digital Rights Management) system is given. And, the process list preparation means 162 may add the process of outputting the content to a system other than the specific DRM system to a list of the unauthorized processes, based upon the information received from the content distribution server 150.

Further, the process list preparation means 162 of the permission information distribution server 160 automatically prepares a list of the interrupt processes based upon the details of the software notified by the communication means 301 of the consumption device 3. For example, in a case where the software of an alarm is installed in the consumption device 3, the process of an alarm is added to a list of the interrupt processes because it is thought that it is given a higher priority than the content consumption. Such processes include the arrival of the incoming telephone call, the incoming E-mail, and the incoming instant message in addition hereto. In such a manner, the process list preparation means 162 of the permission information distribution server 160 prepares a list of the unauthorized processes and a list of the interrupt processes, and the permission information distribution means 161 transmits permission information including a list of the unauthorized processes and a list of the interrupt processes to the consumption device 3.

In the consumption device 3, the communication means 301 receives the permission information including a list of the unauthorized processes and a list of the interrupt processes, which are stored by the permission storage means 303. At the moment that the control means 305 causes the consumption/execution means 304 to reproduce the content, the former instructs the process determination means 308 to read out a list of the unauthorized processes and a list of the interrupt processes stored by the permission storage means 303, and the process determination means 308 makes a reference to a list of the unauthorized processes and a list of the interrupt processes stored by the storage section of the consumption device 3, and a list of the unauthorized processes and a list of the interrupt processes read out from the permission storage means 303, thereby to determine the unauthorized process and the interrupt process. An operation other than the operation of determining the unauthorized process and the interrupt process that the process determination means 308 performs is similar to that of the first embodiment of the present invention, so an explanation is omitted.

As mentioned above, this embodiment makes it possible to flexibly set the unauthorized process/interrupt process responding to the kind of the content and the kind of the software installed in the consumption device 3 in addition to the effect of the first embodiment.

Additionally, the second embodiment and the third embodiment of the present invention were described as a modification example to the first embodiment; it is also possible to combine each of the first embodiment to third embodiment with the other. Also in the embodiment realized by this combination, an effect similar to that of the first embodiment to third embodiment can be realized.

### Embodiment 4

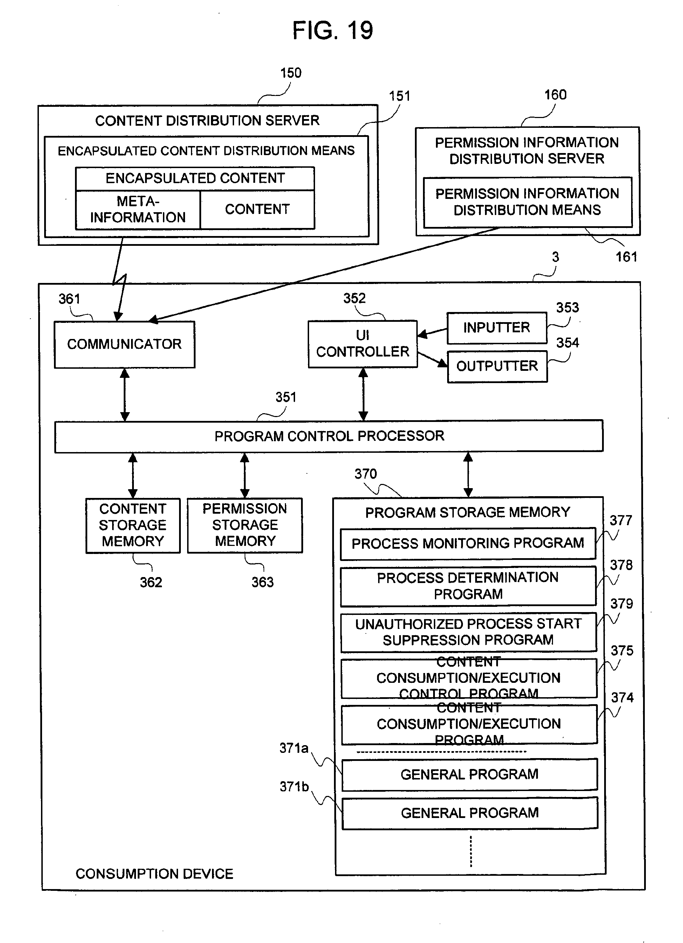

The fourth embodiment will be explained by making a reference to the accompanied drawings. Fig. 19 is a block diagram illustrating one configuration example of the fourth embodiment of the present invention.

The fourth embodiment of the present invention allows the content consumption control method in accordance with the present invention to be packaged as a program that is executed by a processor, and the consumption device 3 to execute the packaged program. The consumption device 3 includes a program control processor 351 for executing a program, an inputter 353 into which the user inputs an instruction, an outputter 354 for outputting information to the user, a UI (User Interface) controller 352 for controlling the inputter 353 and the outputter 354, a communicator 361 for receiving the content from the content distribution server 150, and receiving permission information from the permission information distribution server 160, a content storage memory 362 for storing the content received from the content distribution server 150 by the communicator 361, a permission storage memory 363 for storing the permission information received by communicator 361 from the permission information distribution server 160, and a program storage memory 370 for storing a program.

The program storage memory 370 stores a content consumption/execution program 374 for causing the program control processor 351 to execute the consumption or execution of the content, a content consumption/execution control program 375 for causing the program control processor 351 to taking a control of the consumption or execution of the content, a process monitoring program 377 for causing the program control processor 351 to monitor the process, a process determination program 378 for causing the program control processor 351 to determine which kind of the process the program control processor 351 is going to start or end, and an unauthorized process start repression program 379 for causing the program control processor 351 to suppress the start of the unauthorized process, in addition to a general program.

The UI controller 352 and the inputter 353 have a function of the command input means 306, respectively. Further, the communicator 361 performs an operation similar to that of the communication means 301. The content storage memory 362 stores the encapsulated content, and the permission storage memory 363 stores the permission information. Further, the content consumption/execution program 374 causes the program control processor 351 to execute an operation similar to that of the consumption/execution means 304, the content consumption/execution control program 375 causes the program control processor 351 to perform an operation similar to that of the control means 305, the process monitoring program 377 causes the program control processor 351 to perform an operation similar to that of the process monitoring means 307, the process determination program 378 causes the program control processor 351 to perform an operation similar to that of the process determination means 308, and the unauthorized process start suppression program 379 causes the program control processor 351 to perform an operation similar to that of the unauthorized process start suppression means 309, respectively.

The fourth embodiment assumes a configuration having each means of the first embodiment, the second embodiment, and the third embodiment replaced with each program, so an operation of the fourth embodiment is similar to the operation of each means of the first embodiment, the second embodiment, and the third embodiment. For this, an explanation of the operation of the fourth embodiment is omitted.

As mentioned above, in accordance with this embodiment, an effect of the present invention can be realized with the terminal that operates under the program control, for example, the PC, the PDA, etc. because each means of the consumption device 3 is realized by means of the program.

### Embodiment 5

Next, a fifth embodiment of the present invention will be explained in details by making a reference to the accompanied drawings.

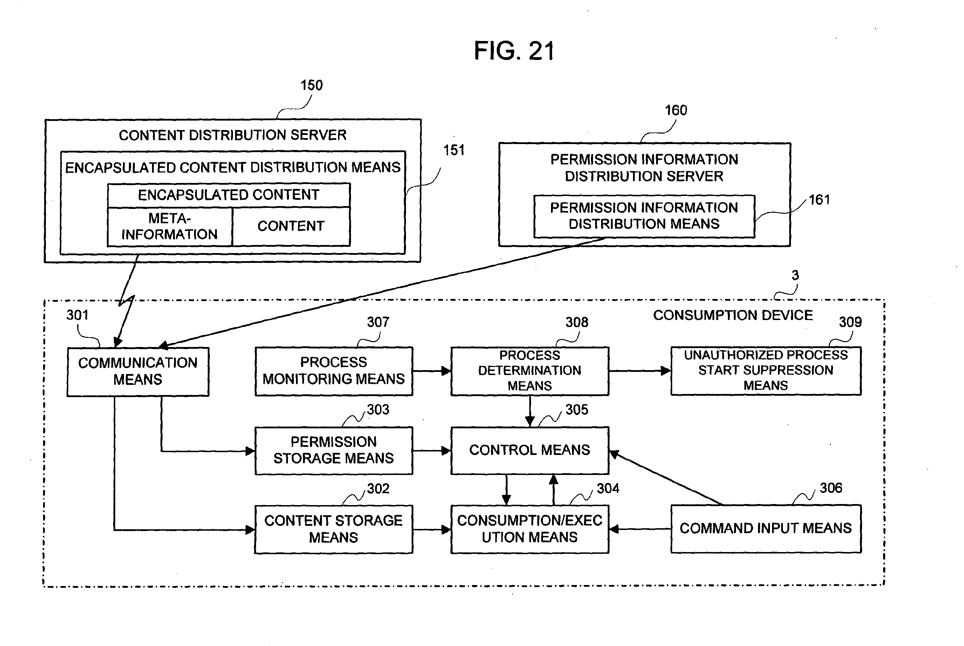

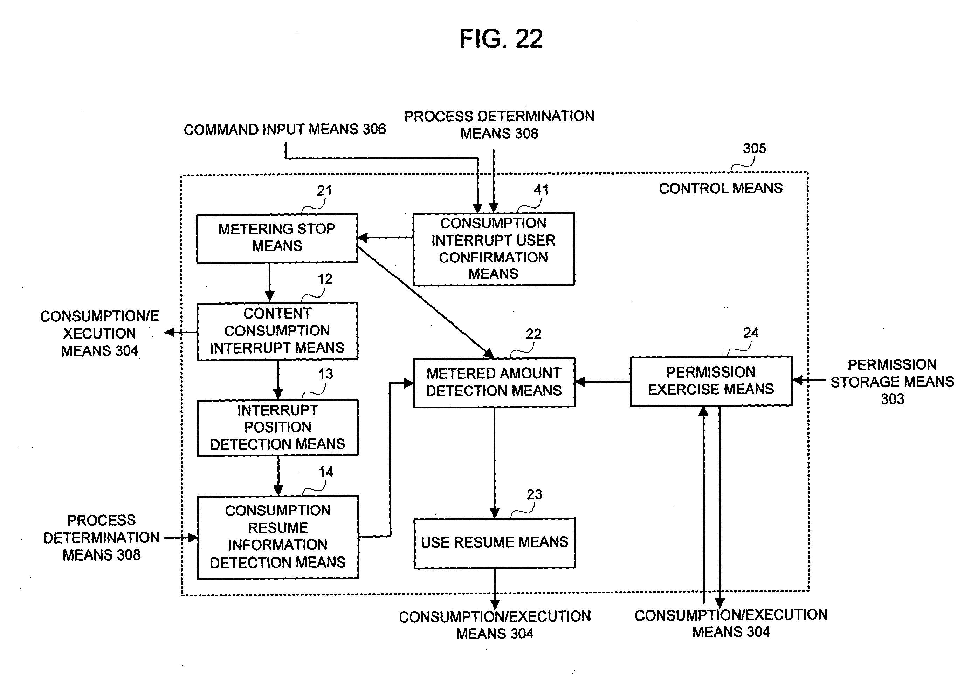

Each of Fig. 21 and Fig. 22 is a block diagram of the fifth embodiment. By making a reference to Fig. 21 and Fig. 22, the fifth embodiment of the present invention is almost identical to the first embodiment of the present invention in the configuration except that the control means 305 processes an input of the command input means 306, and the control means 305 has consumption interrupt user confirmation means 41. In the following explanation, an operation different from that of the first embodiment of the present invention will be explained in details.

When the consumption interrupt user confirmation means 41 is notified that the interrupt process has been started from the process determination means 308, the former notifies the user that the interrupt process has been started, causes the user to select one of (a) a step of interrupting the consumption to perform the interrupt process, and (b) a step of continuing the consumption without performing the interrupt process, and the above-mentioned (a) or (b) is executed, based upon the user's input into the command input means 306. At this time, in a case where the input by the user demands that (a) be executed, the metering stop means 21 of the control means 305 executes it.

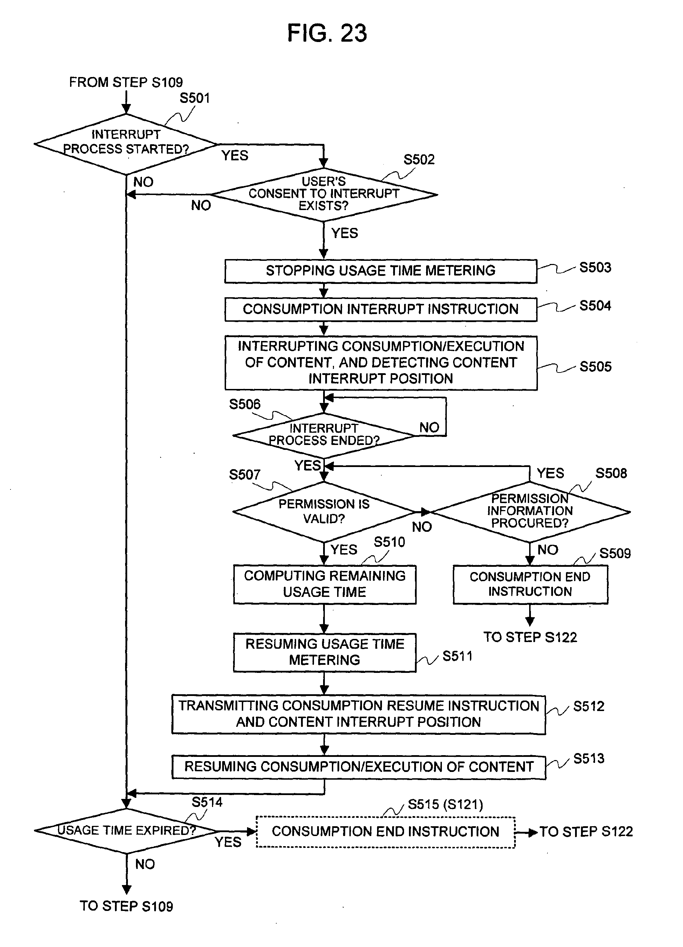

Next, an operation of this embodiment different from that of the first embodiment will be explained in details by making a reference to flowcharts of Fig. 22 and Fig. 23.

The flowchart of Fig. 23 is a flowchart relating to the process that is added between the step S109 and the step S122 of the flowchart of Fig. 10. In this case, the following process is performed depending upon existence of the start of the interrupt process that is notified to the control means 305 from the process determination means 308 (step S109).

At first, when there is no start of the interrupt process in the step S109, a step S514 is executed. In the step S514, so long as the permission to which a reference was made in the step S103 includes the condition of the usage time, the control means 305 executes the S109 in a case where the usage time has not expired, and executes a step S515 (S121) after outputting a consumption end instruction to the consumption/execution means 304 in a case where it has expired.

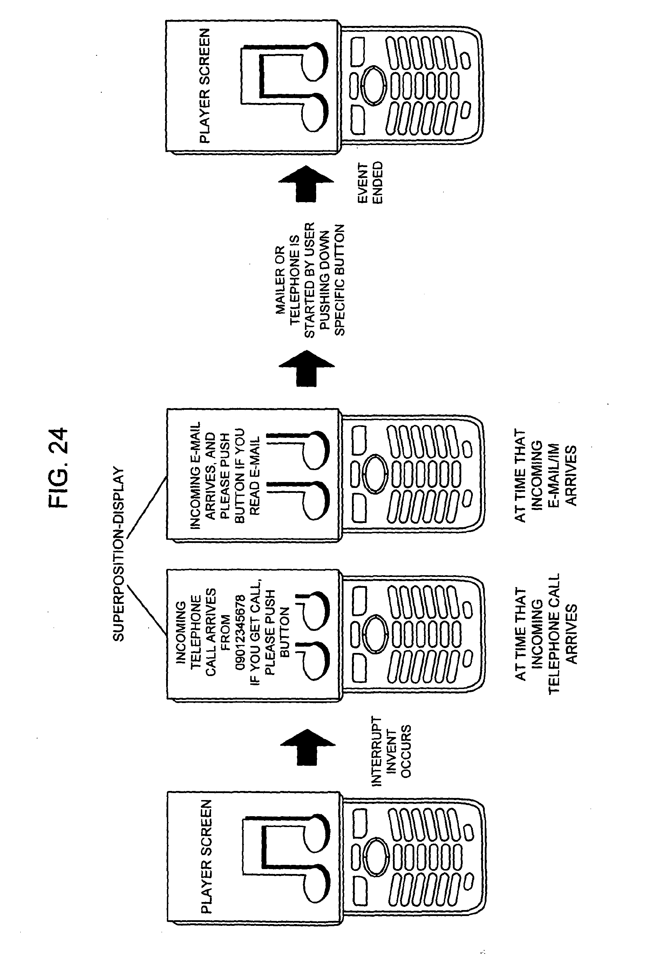

Next, when there is the start of the interrupt process in the step S501, like an example shown in Fig. 24, the effect that the interrupt process has been executed is notified (step S502). In Fig. 24, the user is being pressed for the input with a button for executing the interrupt processes for which a superposition-display has been made on the player screen. In a case where there is no input with a button by the user, no interrupt process is performed, and the consumption continues as it stands.

Additionally, in this example, the start of the interrupt process is notified to the user by making a superposition-display for it on the screen; however a notification employing a voice or vibration of the terminal, a notification employing a combination of a voice/screen/vibration, or the like may be used.

In addition hereto, in a case where the control means 305 is taking the usage time control of the content (this includes all controls of using the usage time that has passed since starting the consumption, for example, a control of limiting the total usage time, a control of counting up the consumption number of times as being one time in the case that a constant usage time or more has passed, and so on), it may display the remaining valid portion (the remaining reproducible time in a case of using the accumulated usage time. Further, the remaining time before counting up the consumption number of times as being one time, the number of times, or the like in a case of such a control of counting up the number of times on the assumption that the content has been reproduced one time in the case that a constant usage time or more has passed), thereby to provide for the user a material for judgment as to whether the consumption is interrupted.

When the execution of the interrupt process is input by the user in the step S502, in a case where the control means 305 is taking the usage time control of the content (this includes all controls of using the usage time that has passed since starting the consumption, for example, a control of limiting the total usage time, a control of counting up the consumption number of times as being one time in the case that a constant usage time or more has passed, and so on), it stops the measurement of the usage time (step S503) to output a consumption interrupt instruction to the consumption/execution means 304 (step S504). When the consumption/execution means 304 receives the consumption interrupt instruction, it interrupts the consumption/execution of the content, and the interrupt position detection means 13 of the control means 305 detects a content consumption interrupt position (step S504).

Next, when the end of the interrupt process is notified to the control means 305 from the process determination means 308 (step S506), the former determines whether the permission to which a reference was made in the step S103 is valid (step S507).

In a case where the permission is invalid, the user is urged to procure a new permission (step S508). In a case where the user procures the permission, the step S507 is executed again after procurement. On the other hand, in a case where the user doe not procure the permission, a step S509 (S121) is executed after outputting a consumption end instruction to the consumption/execution means 304.

When the permission is valid in the step S507, in a case where the control means 305 is taking the usage time control of the content, the remaining usage time of the content is computed (step S510), the measurement of the usage time is resumed (S511), and a consumption resume instruction and the content consumption interrupt position are output to the consumption/execution means 304 (step S512). And, the consumption/execution means 304 resumes the consumption/execution of the content (step S513). At this time, as shown in Fig, 24, the player may be started directly in some cases, and the remaining valid portion (the remaining reproducible time in a case of using the accumulated usage time. Further, the remaining time before counting up the consumption number of times as being one time, the number of times, or the like in a case of such a control of counting up the number of times on the assumption that the content has been reproduced one time in the case that a constant usage time or more has passed) may be displayed at the time of the start, thereby to confirm a user's intention of the resume. Hereafter, a step S514 is executed.

Additionally, there is also the case of unconditionally permitting the resume of the consumption and execution of the content at the time of resuming or at the time that the incoming is ended. Namely, this is just the case that the permission that the permission information indicated was valid at the time of starting the content consumption, and the case such that the copyright management policy saying that the permission is valid till the consumption of the content is ended has been set. The embodiments of the present invention does not presume that such a policy is set, so the processes of the step S115, the step S116, the step S117, the step S507, the step S508, and the step S509 are described; however in a case of having set the above-mentioned the copyright management policy, these steps may be omitted.

As mentioned above, in addition to the effect of the first embodiment, this embodiment enables the user to select one of a step in which the user performs the interrupt process when the interrupt process occurs, and a step in which the user neglects the interrupt process to continuously reproduce the content.

Additionally, in the fifth embodiment of the present invention, it is also possible to appropriately combine the foregoing first to third embodiments, and the fifth embodiment. Also in the embodiment that can be realized by this, an effect similar to the effect mentioned above can be realized.

### [SUSCEPTIBLE OF INDUSTRIAL APPLICATION]

The present invention enables the mobile telephone terminal to be applied in the field of the content consumption. Further, it enables the content consumption terminal other than this to be applied also in the field such as the device (for example, a car navigation system, an entertainment device in an aircraft, a music player with a radio broadcast reception function, etc.), which has an application to the other than the content consumption, and performs the process having a high priority degree in addition to the content consumption.

## Claims

1. A content consumption control method, **characterized in**:
measuring a metered amount of a content;
storing a list of interrupt processes, being processes that are executed with a higher priority than a consumption of the content;
determining whether or not the process that is going to be started during the consumption of the content is said interrupt process;
when it is determined that the process that is going to be started is said interrupt process, storing the amount of the content used so far, and interrupting the consumption of the content till an execution of said interrupt process is ended;
when said execution of said interrupt process is ended, detecting said stored metered amount of the content; and
resuming the consumption of the content responding to said detected metered amount of the content.

2. The content consumption control method according to claim 1, **characterized in**:
measuring a consumption time of the content as a measurement of the metered amount of the content;
when it is determined that the process that is going to be started is the interrupt process, stopping the measurement of the consumption time of the content; and
when said execution of said interrupt process is ended, resuming the measurement of the consumption time of the content.

3. A content consumption control method, **characterized in that**:
a distribution side distributes permission information, being information including a list of interrupt processes, being processes that are executed with a higher priority than a consumption of a content; and
a reception side:
makes a reference to the received permission information, thereby to determine whether or not the process that is going to be started during the consumption of the content is said interrupt process; and
interrupts the consumption of the content till an execution of said interrupt process is ended when it is determined that the process that is going to be started is said interrupt process.

4. The content consumption control method according to claim 3, **characterized in that**:
the distribution side distributes permission information including information for limiting a consumption time of the content; and
the reception side:
measures the consumption time of the content;
stops the measurement of the consumption time of the content when it is determined that the process that is going to be started is the interrupt process; and
resumes the measurement of the consumption time of the content when said execution of said interrupt process is ended.

5. A content consumption control method, **characterized in**:
storing a list of unauthorized processes, being processes that might cause unauthorized copying of a content, or tampering of a content, and a list of interrupt processes, being processes that are executed with a higher priority than a consumption of the content;
determining whether the process that is going to be started during the consumption of the content is said unauthorized process, said interrupt process, or a process other than said unauthorized process and said interrupt process;
when it is determined that the process that is going to be started is said interrupt process, interrupting the consumption of the content till an execution of said interrupt process is ended; and
when it is determined that the process that is going to be started is said unauthorized process, suppressing a start of its process.

6. A content consumption control method, **characterized in**:
storing a list of unauthorized processes, being processes that might cause unauthorized copying of a content, or tampering of a content, a list of interrupt processes, being processes that are executed with a higher priority than a consumption of the content, and data of the content for consumption;
determining whether the process that is going to be started during the consumption of the content is said unauthorized process, said interrupt process, or a process other than said unauthorized process and said interrupt process;
when it is determined that the process that is going to be started is said interrupt process, interrupting the consumption of the content till an execution of said interrupt process is ended; and
when it is determined that the process that is going to be started is said unauthorized process, deleting data of the content for consumption.

7. The content consumption control method according to one of claim 5 and claim 6, **characterized in**, when a distribution side distributes the content with a consumption time of the content limited:
measuring the consumption time of the content;
when the interrupt process is started, stopping a measurement of the consumption time of the content; and
when said execution of said interrupt process is ended, resuming the measurement of the consumption time of the content.

8. A content consumption control method, **characterized in that**:
a distribution side distributes permission information, being information including a list of unauthorized processes, being processes that might cause unauthorized copying of a content, or tampering of a content, and a list of interrupt processes, being processes that are executed with a higher priority than a consumption of the content; and
a reception side:
stores said received permission information;
makes a reference to said stored permission information, thereby to determine whether the process that is going to be started during the consumption of the content is said unauthorized process, said interrupt process, or a process other than said unauthorized process and said interrupt process;
interrupts the consumption of the content till an execution of said interrupt process is ended when it is determined that the process that is going to be started is said interrupt process; and
when it is determined that the process that is going to be started is said unauthorized process, suppresses a start of its process.

9. A content consumption control method, **characterized in that**:
a distribution side distributes permission information, being information including a list of unauthorized processes, being processes that might cause unauthorized copying of a content, or tampering of a content, and a list of interrupt processes, being processes that are executed with a higher priority than a consumption of the content; and
a reception side:
stores said received permission information;
non-encrypts and stores an encrypted content responding to said permission information;
makes a reference to said stored permission information, thereby to determine whether the process that is going to be started during the consumption of the content is said unauthorized process, said interrupt process, or a process other than said unauthorized process and said interrupt process;
interrupts the consumption of the content till an execution of said interrupt process is ended when it is determined that the process that is going to be started is said interrupt process; and
forcibly ends the consumption of the content to delete data of the non-encrypted content when it is determined that the process that is going to be started is said unauthorized process.

10. The content consumption control method according to one of claim 8 and claim 9, **characterized in**, when the distribution side distributes the encrypted content with a consumption time of the content limited:
measuring the consumption time of the content;
when the interrupt process is started, stopping a measurement of the consumption time of the content; and
when said execution of said interrupt process is ended, resuming the measurement of the consumption time of the content.

11. A content consumption terminal, **characterized in**: including:
control means for measuring a metered amount of a content;
storage section for storing a list of interrupt processes, being processes that are executed with a higher priority than a consumption of the content;
process determination means for determining whether or not the process that is going to be started during the consumption of the content is said interrupt process; and
consumption/execution means for, when said process determination means determines that the process that is going to be started is said interrupt process, interrupting the consumption of the content till an execution of said interrupt process is ended; and
that the control means causes said storage section to store an amount of the content used so far when said process determination means determines that the process that is going to be started is said interrupt process, detects the metered amount of the content stored by said storage section when said execution of said interrupt process is ended, and causes said consumption/execution means to resume the consumption of the content responding to the detected metered amount of the content.

12. The content consumption terminal according to claim 11,
**characterized in**:
including communication means for receiving the content; and
that when a distribution side distributes the content with a consumption time of the content limited, the control means measures the consumption time of the content, stops a measurement of the consumption time of the content when the interrupt process is started, and resumes the measurement of the consumption time of the content when said execution of said interrupt process is ended.

13. A content consumption control system comprising a content consumption terminal for reproducing a content, and a permission information distribution server for distributing permission information, being information indicating a condition in which said content consumption terminal reproduces the content, to the content consumption terminal via a communication line,
**characterized in that**:
the permission information distribution server includes permission information distribution means for distributing permission information including a list of interrupt processes, being processes that are executed with a higher priority than a consumption of the content, to said content consumption terminal; and
said content consumption terminal includes:
process determination means for making a reference to the received permission information, thereby to determine whether or not the process that is going to be started during the consumption of the content is said interrupt process; and
consumption/execution means for, when said process determination means determines that the process that is going to be started is said interrupt process, interrupting the consumption of the content till an execution of said interrupt process is ended.

14. The content consumption control system according to claim 13, **characterized in that**:
the permission information distribution server distributes permission information including information for limiting a consumption time of the content; and
the content consumption terminal includes control means for measuring the consumption time of the content, stopping a measurement of the consumption time of the content when the interrupt process is started, and resuming the measurement of the consumption time of the content when said execution of said interrupt process is ended.

15. A content consumption terminal, **characterized in** including:
communication means for receiving a list of interrupt processes, being processes that are executed with a higher priority than a consumption of a content, from a distribution side;
permission storage means for storing a list of said interrupt processes received by said communication means;
process determination means for making a reference to a list of said interrupt processes stored by said permission storage means, thereby to determine whether or not the process that is going to be started during the consumption of the content is said interrupt process; and
consumption/execution means for, when said process determination means determines that the process that is going to be started is said interrupt process, interrupting the consumption of the content till an execution of said interrupt process is ended.

16. The content consumption terminal according to claim 15,
**characterized in**:
including control means for measuring a consumption time of the content; and
that when a distribution side distributes the content with the consumption time of the content limited, said control means stops a measurement of the consumption time of the content when the interrupt process is started, and resumes the measurement of the consumption time of the content when said execution of said interrupt process is ended.

17. A permission information distribution server, **characterized in** including permission information distribution means for distributing permission information, being information including a list of interrupt processes, being processes that are executed with a higher priority than a consumption of a content, to a content consumption terminal, being a terminal for reproducing the content, via a communication line.

18. The permission information distribution server according to claim 17, **characterized in**:
including process list preparation means for, based upon a program installed into the content consumption terminal, preparing a list of the interrupt processes; and
that the permission information distribution means distributes permission information including a list of said interrupt processes prepared by said process list preparation means to the content consumption terminal via the communication line.

19. A content consumption terminal, **characterized in** including:
a storage section for storing a list of unauthorized processes, being processes that might cause unauthorized copying of a content, or tampering of a content, and a list of interrupt processes, being processes that are executed with a higher priority than a consumption of a content;
process determination means for determining whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
unauthorized process start suppression means for, when said process determination means determines that the process that is going to be started is said unauthorized process, suppressing a start of its process.

20. A content consumption terminal, **characterized in** including:
a storage section for storing data of a non-encrypted content, a list of unauthorized processes, being processes that might cause unauthorized copying of a content, or tampering of a content, and a list of interrupt processes, being processes that are executed with a higher priority than a consumption of the content;
process determination means for determining whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
control means for non-encrypting an encrypted content, thereby to cause said storage section to store it, when said process determination means determines that the process that is going to be started is said unauthorized process, causing said consumption/execution means to forcibly end the consumption of the content, and deleting data of the non-encrypted content from said storage section.

21. The content consumption terminal according to one of claim 19 and claim 20, **characterized in**:
including communication means for receiving the encrypted content; and
that when a distribution side distributes said encrypted content with a consumption time of the content limited, the control means measures the consumption time of the content, stops a measurement of the consumption time of the content when the interrupt process is started, and resumes the measurement of the consumption time of the content when said execution of said interrupt process is ended.

22. A content consumption control system comprising:
a content consumption terminal, being a terminal for reproducing a content; and
a permission information distribution server including permission information distribution means for distributing permission information, being information including a list of unauthorized processes, being processes that might cause unauthorized copying of a content, or tampering of a content, and a list of interrupt processes, being processes that are executed with a higher priority than a consumption of the content, to said content consumption terminal via a communication line, **characterized in that** said content consumption terminal includes:
process determination means for making a reference to the received permission information, thereby to determine whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
unauthorized process start repression means for, when said process determination means determines that the process that is going to be started is said unauthorized process, suppressing a start of its process.

23. A content consumption control system comprising:
a content consumption terminal, being a terminal for reproducing a content; and
a permission information distribution server including permission information distribution means for distributing permission information, being information including a list of unauthorized processes, being processes that might cause unauthorized copying of a content, or tampering of a content, and a list of interrupt processes, being processes that are executed with a higher priority than a consumption of the content, to said content consumption terminal via a communication line, **characterized in that** said content consumption terminal includes:
process determination means for making a reference to the received permission information, thereby to determine whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
control means for, when said process determination means determines that the process that is going to be started is said unauthorized process, causing said consumption/execution means to forcibly end the consumption of the content, and deleting data of the content for consumption.

24. The content consumption control system according to one of claim 22 and claim 23, **characterized in that**:
the content consumption terminal includes communication means for receiving the content; and
when a distribution side distributes the content with a consumption time of the content limited, said control means measures the consumption time of the content, stops a measurement of the consumption time of the content when the interrupt process is started, and resumes the measurement of the consumption time of the content when said execution of said interrupt process is ended.

25. A content consumption terminal, **characterized in** including:
communication means for receiving a list of unauthorized processes, being processes that might cause unauthorized copying of a content, or tampering of a content, and a list of interrupt processes, being processes that are executed with a higher priority than a consumption of the content, from a distribution side;
permission storage means for storing a list of said unauthorized processes and a list of said interrupt processes received by said communication means;
process determination means for making a reference to a list of said unauthorized processes and a list of said interrupt processes stored by said permission storage means, thereby to determine whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
unauthorized process start repression means for, when said process determination means determines that the process that is going to be started is said unauthorized process, suppressing a start of its process.

26. A content consumption terminal, **characterized in** including:
communication means for receiving a list of unauthorized processes, being processes that might cause unauthorized copying of a content, or tampering of a content, and a list of interrupt processes, being processes that are executed with a higher priority than a consumption of the content, from a distribution side;
permission storage means for storing a list of said unauthorized processes and a list of said interrupt processes received by said communication means;
a storage section for storing the content for consumption;
process determination means for making a reference to a list of said unauthorized processes and a list of said interrupt processes stored by said permission storage means, thereby to determine whether the process that is going to be started during the consumption of the content is said unauthorized process, said interrupt process, or a process other than said unauthorized process and said interrupt process;
consumption/execution means for, when said process determination means determines that the process that is going to be started is said interrupt process, interrupting the consumption of the content till an execution of said interrupt process is ended; and
control means for, when said process determination means determines that the process that is going to be started is said unauthorized process, causing said consumption/execution means to forcibly end the consumption of the content, and deleting data of the content for consumption from said storage section.

27. The content consumption terminal according to one of claim 25 and claim 26, **characterized in that** when the distribution side distributes the content with a consumption time of the content limited, the control means measures the consumption time of the content, stops a measurement of the consumption time of the content when the interrupt process is started, and resumes the measurement of the consumption time of the content when said execution of said interrupt process is ended.

28. A permission information distribution server, **characterized in** including permission information distribution means for distributing permission information, being information including a list of unauthorized processes, being processes that might cause unauthorized copying of a content, or tampering of a content, and a list of interrupt processes, being processes that are executed with a higher priority than a consumption of the content, to a content consumption terminal, being a terminal for reproducing the content, via a communication line.

29. The permission information distribution server according to claim 28, **characterized in**:
including process list preparation means for, based upon a program installed into the content consumption terminal, and a kind of the content that said content consumption terminal reproduces, preparing a list of the unauthorized processes, and a list of the interrupt processes; and
that the permission information distribution means distributes permission information including a list of the unauthorized processes and a list of the interrupt processes prepared by said process list preparation means to the content consumption terminal via the communication line.

30. A content consumption control program, **characterized in** causing a computer storing a list of interrupt processes, being processes that are executed with a higher priority than a consumption of a content, to execute:
a process determination process of determining whether or not the process that is going to be started during the consumption of the content is said interrupt process;
a control process of measuring a metered amount of the content, and when it is determined in said process determination process that the process that is going to be started is said interrupt process, causing a storage section to store the amount of the content used so far;
a consumption/execution process of, when it is determined in said process determination process that the process that is going to be started is said interrupt process, interrupting the consumption of the content till an execution of said interrupt process is ended; and
a process, being a control process, of, when said execution of said interrupt process is ended, detecting a content metered amount stored by said storage section, thereby to cause said consumption/execution process to resume the consumption of the content responding to the detected metered amount of the content.

31. The content consumption control program according to claim 30 for causing the computer to execute a process of measuring a consumption time of the content as a measurement of the metered amount of the content, a process of, when the interrupt process is started, stopping a measurement of the consumption time of the content, and a process of, when said execution of said interrupt process is ended, resuming the measurement of the consumption time of the content, each of which is a control process.

32. A content consumption control program, **characterized in** causing a computer storing permission information, being information including a list of interrupt processes, being processes that are executed with a higher priority than a consumption of a content, to execute:
a process determination process of making a reference to said permission information, thereby to determine whether or not the process that is going to be started during the consumption of the content is said interrupt process; and
a consumption/execution process of, when it is determined in said process determination process that the process that is going to be started is said interrupt process, interrupting the consumption of the content till an execution of said interrupt process is ended.

33. The content consumption control program according to claim 32 for, when a distribution side distributes the content with a consumption time of the content limited, causing the computer to execute a process of measuring the consumption time of the content, a process of, when the interrupt process is started, stopping a measurement of the consumption time of the content, and a process of, when said execution of said interrupt process is ended, resuming the measurement of the consumption time of the content, each of which is a control process.

34. A permission information distribution program, **characterized in** causing a computer storing a list of interrupt processes, being processes that are executed with a higher priority than a consumption of a content, to execute a permission information distribution process of distributing permission information, being information including a list of said interrupt processes, to a content consumption terminal, being a terminal for reproducing the content.

35. The permission information distribution program according to claim 34 for causing the computer:
to execute a process list preparation process of preparing a list of the interrupt processes based upon a program installed into the content consumption terminal; and
to execute a process, being a permission information distribution process, of distributing permission information including a list of said interrupt processes prepared in said process list preparation process.

36. A content consumption control program, **characterized in** causing a computer storing a list of unauthorized processes, being processes that might cause unauthorized copying of a content, or tampering of a content, and a list of interrupt processes, being processes that are executed with a higher priority than a consumption of a content, to execute:
a process determination process of determining whether the process that is going to be started during the consumption of the content is said unauthorized process, said interrupt process, or a process other than said unauthorized process and said interrupt process;
a consumption/execution process of, when it is determined in said process determination process that the process that is going to be started is said interrupt process, interrupting the consumption of the content till an execution of said interrupt process is ended; and
an unauthorized process start suppression process of, when it is determined in said process determination process that the process that is going to be started is said unauthorized process, suppressing a start of its process.

37. A content consumption control program, **characterized in** causing a computer storing a list of unauthorized processes, being processes that might cause unauthorized copying of a content, or tampering of a content, and a list of interrupt processes, being processes that are executed with a higher priority than a consumption of the content, to execute:
a process determination process of determining whether the process that is going to be started during the consumption of the content is said unauthorized process, said interrupt process, or a process other than said unauthorized process and said interrupt process;
a consumption/execution process of, when it is determined in said process determination process that the process that is going to be started is said interrupt process, interrupting the consumption of the content till an execution of said interrupt process is ended; and
a process of non-encrypting an encrypted content, thereby to cause a storage section to store it, a process of, when it is determined in said process determination process that the process that is going to be started is said unauthorized process, causing said consumption/execution process to forcibly end the consumption of the content, and a process of deleting data of a non-encrypted content from said storage section, each of which is a control process.

38. The content consumption control program according to one of claim 36 and claim 37 for, when a distribution side distributes the content with a consumption time of the content limited, causing the computer to execute a process of measuring the consumption time of the content, a process of, when the interrupt process is started, stopping a measurement of the consumption time of the content, and a process of, when an execution of said interrupt process is ended, resuming the measurement of the consumption time of the content, each of which is a control process.

39. A content consumption control program, **characterized in** causing a computer storing permission information, being information including a list of unauthorized processes, being processes that might cause unauthorized copying of a content, or tampering of a content, and a list of interrupt processes, being processes that are executed with a higher priority than a consumption of the content, to execute:
a process determination process of making a reference to said permission information, thereby to determine whether the process that is going to be started during the consumption of the content is said unauthorized process, said interrupt process, or is a process other than said unauthorized process and said interrupt process;
a consumption/execution process of, when it is determined in said process determination process that the process that is going to be started is said interrupt process, interrupting the consumption of the content till an execution of said interrupt process is ended; and
an unauthorized process start suppression process of, when it is determined in said process determination process that the process that is going to be started is said unauthorized process, suppressing a start of its process.

40. A content consumption control program, **characterized in** causing a computer storing permission information, being information including a list of unauthorized processes, being processes that might cause unauthorized copying of a content, or tampering of a content, and a list of interrupt processes, being processes that are executed with a higher priority than a consumption of the content, to execute:
a process determination process of making a reference to said permission information, thereby to determine whether the process that is going to be started during the consumption of the content is said unauthorized process, said interrupt process, or a process other than said unauthorized process and said interrupt process;
a consumption/execution process of, when it is determined in said process determination process that the process that is going to be started is said interrupt process, interrupting the consumption of the content till an execution of said interrupt process is ended; and
a process, being a control process, of non-encrypting an encrypted content, thereby to cause a storage section to store it, when it is determined in said process determination process that the process that is going to be started is said unauthorized process, causing said consumption/execution process to forcibly end the consumption of the content, and deleting data of the non-encrypted content from said storage section.

41. The content consumption control program according to one of claim 39 and claim 40 for, when a distribution side distributes the content with a consumption time of the content limited, causing the computer to execute a process of measuring the consumption time of the content, a process of, when the interrupt process is started, stopping a measurement of the consumption time of the content, and a process of, when an execution of said interrupt process is ended, resuming the measurement of the consumption time of the content, each of which is a control process.

42. A permission information distribution program, **characterized in** causing a computer storing a list of unauthorized processes, being processes that might cause unauthorized copying of a content, or tampering of a content, and a list of interrupt processes, being processes that are executed with a higher priority than a consumption of the content, to execute a permission information distribution process of distributing permission information, being information including a list of said unauthorized processes and a list of said interrupt processes, to a content consumption terminal, being a terminal for reproducing the content.

43. The permission information distribution program according to claim 42 for causing the computer:
to execute a process list preparation process of preparing a list of the unauthorized processes and a list of the interrupt processes based upon a program installed into the content consumption terminal; and
to execute a process, being a permission information distribution process, of distributing permission information including a list of the unauthorized processes and a list of the interrupt processes prepared in said process list preparation process to the content consumption terminal.

44. A content consumption control method, **characterized in**:
based upon a list of interrupt processes having a higher priority than a content consumption, determining whether the process that is going to be started or ended during the content consumption is equivalent to said interrupt process having a higher priority;
in a case of a start of said interrupt process having a higher priority, preserving an amount of the content used so far, and interrupting the consumption of the content till the interrupt process is ended; and
at the time that said interrupt process is ended, detecting the preserved metered amount of the content, and resuming the content consumption based upon a use control method of the content.

45. The content consumption control method according to claim 44, **characterized in**, in a case where said content use control method is a control method of a consumption time, or a number-of-times control method of measuring the number of times on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

46. A content consumption control method, **characterized in**:
allowing a list of interrupt processes having a higher priority than a content consumption to be included in permission information of a content consumption, thereby to distribute this permission information to a content consumption terminal before reproducing a content; and
that the content consumption terminal:
makes a reference to said permission information, thereby to determine whether the process that is going to be started or ended during the consumption of the content is equivalent to said interrupt process having a higher priority; and
interrupts the consumption of the content till said interrupt process is ended in a case of a start of said interrupt process having a higher priority.

47. The content consumption control method according to claim 46, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

48. A content consumption control method, **characterized in**:
having a list of unauthorized processes that might cause unauthorized copying/tampering of a content, and a list of interrupt processes having a higher priority than a content consumption;
determining whether the process that is going to be started or ended during the content consumption is equivalent to any of said two processes;
in a case where said process is equivalent to said interrupt process that is started, interrupting the consumption of the content till the interrupt process is ended; and
in a case where said process is said unauthorized process, suppressing a start of its process.

49. A content consumption control method, **characterized in**:
having a list of unauthorized processes that might cause unauthorized copying/tampering of a content, and a list of interrupt processes having a higher priority than a content consumption;
determining whether the process that is going to be started or ended during the content consumption is equivalent to any of said two processes;
in a case where said process is equivalent to said interrupt process that is started, interrupting the consumption of the content till the interrupt process is ended; and
deleting data of the content for consumption.

50. The content consumption control method according to one of claim 48 and claim 49, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

51. A content consumption control method, **characterized in**:
filing a list of unauthorized processes that might cause unauthorized copying/tampering of a content, and a list of interrupt processes having a higher priority than a content consumption into a permission of a content consumption, thereby to distribute this permission to a content consumption terminal before reproducing the content;
that said content consumption terminal:
makes a reference to said permission, thereby to determine whether the process that is going to be started or ended during the content consumption is equivalent to any of said two processes;
interrupts the consumption of the content till the interrupt process is ended in a case where said process is equivalent to said interrupt process that is started; and
suppresses a start of said process in a case where said process is said unauthorized process.

52. A content consumption control method, **characterized in**:
filing a list of unauthorized processes that might cause unauthorized copying/tampering of a content, and a list of interrupt processes that have a higher priority than a content consumption into a permission of a content consumption, thereby to distribute this permission to a content consumption terminal before reproducing the content; and
that the content consumption terminal:
makes a reference to said permission, thereby to determine whether the process that is going to be started/ended during the content consumption is equivalent to any of said two processes;
interrupts the consumption of the content till the interrupt process is ended in a case where said process is equivalent to said interrupt process that is started; and
forcibly ends the consumption of the content to delete data of a non-encrypted content in a case where said process is said unauthorized process.

53. The content consumption control method according to one of claim 51 and claim 52, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

54. A content consumption control system, **characterized in** having:
a list of interrupt processes having a higher priority than a content consumption;
means for determining whether the process that is going to be started or ended during the content consumption is equivalent to said interrupt process;
means for preserving an amount of the content used so far;
means for, in a case of a start of said interrupt process, interrupting the consumption of the content till the interrupt process is ended; and
means for, at the time that said interrupt process is ended, detecting the preserved content metered amount, and resuming the content consumption in line with a use control method.

55. The content consumption control system according to claim 54, **characterized in**, in a case where said content use control method is a control method of a consumption time, or a number-of-times control method of measuring the number of times on the assumption that the content has been reproduced one time in the case that a certain time has passed since a consumption start, including means for stopping a measurement of the consumption time at the time of starting said interrupt process, and resuming the measurement of the consumption time at the time that said interrupt process is ended.

56. A content consumption control system, **characterized in that**:
a server has means for distributing a permission of a content consumption having a list of interrupt processes filed to a content consumption terminal before reproducing a content; and
the content consumption terminal has the means for:
making a reference to said permission, thereby to determine whether the process that is going to be started/ended during the content consumption is equivalent to said interrupt process; and
in a case of a start of said interrupt process, interrupting the consumption of the content till the interrupt process is ended.

57. The content consumption control system according to claim 56, **characterized in that**, in a case where the content has been distributed with a limit to a consumption time set, or a limit to the number of times set, in which the number of times is measured on the assumption that the content has been reproduced one time in the case that a certain time has passed since a consumption start, said content consumption terminal has means for stopping a measurement of the consumption time at the time of starting said interrupt process, and resuming the measurement of the consumption time at the time that said interrupt process is ended.

58. A terminal, **characterized in** having the means for:
making reference to a permission of a content consumption having a list of interrupt processes having a higher priority than a content consumption filed, thereby to determine whether the process that is going to be started or ended during the content consumption is equivalent to said interrupt process; and
in a case of a start of said interrupt process, interrupting the consumption of the content till the interrupt process is ended.

59. The terminal according to claim 58, **characterized in**, in a case where the content has been distributed with a limit to a consumption time set, or a limit to the number of times set, in which the number of times is measured on the assumption that the content has been reproduced one time in the case that a certain time has passed since a consumption start, having means for stopping a measurement of the consumption time at the time of starting said interrupt process, and resuming the measurement of the consumption time at the time that said interrupt process is ended.

60. A server, **characterized in** having means for distributing permission of a content consumption having a list of interrupt processes having a higher priority than a content consumption filed to a content consumption terminal before reproducing a content.

61. The server according to claim 60, **characterized in** having means for, based upon a program installed into the terminal to which the permission of the content consumption is distributed, preparing a list of the interrupt processes having a higher priority than the content consumption.

62. A content consumption control system, **characterized in** having:
a list of unauthorized processes that might cause unauthorized copying/tampering of a content;
a list of processes (interrupt processes) having a higher priority than a content consumption;
means for determining whether the process that is going to be started or ended during the content consumption is equivalent to any of said two process;
means for, in a case where said process is equivalent to said interrupt process that is started, interrupting the consumption of the content till the interrupt process is ended; and
means for, in a case where said process is said unauthorized process, suppressing a start of its process.

63. A content consumption control system, **characterized in** having:
a list of unauthorized processes that might cause unauthorized copying/tampering of a content;
a list of interrupt processes having a higher priority than a content consumption;
means for determining whether the process that is going to be started/ended during the content consumption is equivalent to any of said two processes;
means for, in a case where said process is equivalent to said interrupt process that is started, interrupting the consumption of the content till the interrupt process is ended; and
means for, in a case where said process is said unauthorized process, forcibly ending the consumption of the content to delete data of a non-encrypted content.

64. The content consumption control system according to one of claim 62 and claim 63, **characterized in**, in a case where the content has been distributed with a limit to a consumption time set, or a limit to the number of times set, in which the number of times is measured on the assumption that the content has been reproduced one time in the case that a certain time has passed since a consumption start, having means for stopping a measurement of the consumption time at the time of starting said interrupt process, and resuming the measurement of the consumption time at the time that said interrupt process is ended.

65. A content consumption control system, **characterized in that**:
a server has means for distributing a permission of a content consumption having a list of unauthorized processes that might cause unauthorized copying/tampering of a content, and a list of interrupt processes having a higher priority than a content consumption filed to a content consumption terminal before reproducing the content; and
the content consumption terminal has the means for:
making a reference to said permission, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, suppressing a start of its process.

66. A content consumption control system, **characterized in that**:
a server has means for distributing a permission of a content consumption having a list of unauthorized processes that might cause unauthorized copying/tampering of a content, and a list of interrupt processes having a higher priority than a content consumption filed to a content consumption terminal before reproducing the content; and
the content consumption terminal has the means for:
making a reference to said permission, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, forcibly ending the consumption of the content to delete data of the content for consumption.

67. The content consumption control system according to one of claim 65 and claim 66, **characterized in that**, in a case where the content has been distributed with a limit to a consumption time set, or a limit to the number of times set, in which the number of times is measured on the assumption that the content has been reproduced one time in the case that a certain time has passed since a consumption start, said content consumption terminal has means for stopping a measurement of the consumption time at the time of starting said interrupt process, and resuming the measurement of the consumption time at the time that said interrupt process is ended.

68. A terminal, **characterized in** having means for:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, suppressing a start of its processes.

69. A terminal, **characterized in** having the means for:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, forcibly ending the consumption of the content to delete data of the content for consumption.

70. The terminal according to one of claim 68 and claim 69, **characterized in**, in a case where the content has been distributed with a limit to a consumption time set, or a limit to the number of times set, in which the number of times is measured on the assumption that the content has been reproduced one time in the case that a certain time has passed since a consumption start, comprising means for stopping a measurement of the consumption time at the time of starting said interrupt process, and resuming the measurement of the consumption time at the time that said interrupt process is ended.

71. A server, **characterized in** comprising means for distributing a permission of a content consumption having a list of unauthorized processes that might cause unauthorized copying/tampering of a content, and a list of interrupt processes having a higher priority than a content consumption filed to a content consumption terminal before reproducing the content.

72. The server according to claim 71, **characterized in** comprising means for, responding to a program installed into the terminal to which the permission of the content consumption is distributed, and a kind of the content that is reproduced, preparing a list of said interrupt processes and a list of said unauthorized processes.

73. A program having a list of interrupt processes having a higher priority than a content consumption, said program causing a content consumption terminal to execute the processes of:
determining whether the process that is going to be started or ended during the content consumption is equivalent to said interrupt process;
preserving a content amount used so far;
in a case of a start of said interrupt process, interrupting the consumption of the content till the interrupt process is ended; and
at the moment that said interrupt process is ended, detecting the preserved content metered amount, and resuming the content consumption in line with a use control method of the content.

74. The program according to claim 73 for, in a case where said content use control method is a control method of a consumption time, or a number-of-times control method of measuring the number of times on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

75. A program for causing a content consumption terminal to execute the processes of:
making a reference to a permission of a content consumption having a list of interrupt processes having a higher priority than a content consumption filed, thereby to determine whether the process that is going to be started or ended during the content consumption is equivalent to said interrupt process; and
in a case of a start of said interrupt process, interrupting the consumption of the content till the interrupt process is ended.

76. The program according to claim 75 for, in a case where the content has been distributed with a limit to a consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

77. A program for causing a server to execute a process of distributing a permission of a content consumption having a list of interrupt processes having a higher priority than a content consumption filed to a content consumption terminal before reproducing a content.

78. The program according to claim 77 for causing the server to execute a process of, based upon a program installed into the terminal to which the permission of the content consumption is distributed, preparing a list of said interrupt processes.

79. A program having a list of unauthorized processes that might cause unauthorized copying/tampering of a content, and a list of interrupt processes having a higher priority than a content consumption, said program causing a content consumption terminal to execute the processes of:
determining whether the process that is going to be started/ended during the content consumption is equivalent to any of said two processes;
in a case of a start of said interrupt process, interrupting the consumption of the content till the interrupt process is ended; and
in a case of said unauthorized process, suppressing a start of its process.

80. A program having a list of unauthorized processes that might cause unauthorized copying/tampering of a content, and a list of interrupt processes having a higher priority than a content consumption, said program causing a content consumption terminal to execute the processes of:
determining whether the process that is going to be started/ended during the content consumption is equivalent to any of said two processes;
in a case of a start of said interrupt process, interrupting the consumption of the content till the interrupt process is ended; and
in a case of said unauthorized process, forcibly ending the consumption of the content, thereby to delete data of a non-encrypted content.

81. The program according to one of claim 79 and claim 81 for, in a case where the content has been distributed with a limit to a consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

82. A program for causing a content consumption terminal to execute the processes of:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, suppressing a start of its process.

83. A program for causing a content consumption terminal to execute the processes of:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, interrupting the consumption of the content till the interrupt process is ended; and
in a case of said unauthorized process, forcibly ending the consumption of the content to delete data of a non-encrypted content.

84. The program according to one of claim 82 and claim 83 for, in a case where the content has been distributed with a limit to a consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

85. A program for causing a server to execute a process of distributing a permission of a content consumption having a list of unauthorized processes that might cause unauthorized copying/tampering of a content, and a list of interrupt processes having a higher priority than a content consumption filed to a content consumption terminal before reproducing the content.

86. The program according to claim 85 for causing the server to execute a process of, responding to a program installed into the terminal to which the permission of the content consumption is distributed, and a kind of the content that is reproduced, preparing a list of said unauthorized processes and a list of said interrupt processes.

87. A content consumption control method, **characterized in**:
having a list of interrupt processes having a higher priority than a content consumption,
determining whether the process that is going to be started/ended during the content consumption is equivalent to said interrupt process;
preserving a content amount used so far;
in a case of a start of said interrupt process, notifying a user that the interrupt process has been started, and starting the interrupt process when the user inputs the effect that the interrupt process is executed with a higher priority than the content consumption;
interrupting the consumption of the content till the interrupt process is ended, and detecting the preserved content metered amount at the moment that said interrupt process is ended; and
resuming the content consumption in line with a use control method of the content.

88. The content consumption control method according to claim 87, **characterized in**, in a case where said content use control method is a control method of a consumption time, or a number-of-times control method of measuring the number of times on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

89. A content consumption control method, **characterized in**:
filing a list of interrupt processes into a permission of a content consumption; and
distributing said permission to a content consumption terminal before reproducing a content; and that the content consumption terminal:
makes a reference to said permission, thereby to determine whether the process that is going to be started/ ended during the content consumption is equivalent to said interrupt process; and
notifies a user that the interrupt process has been started in a case of a start of said interrupt process, starts the interrupt process when the user inputs the effect that the interrupt process is executed with a higher priority than the content consumption, and interrupts the consumption of the content till the interrupt process is ended.

90. The content consumption control method according to claim 89, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

91. A content consumption control method, **characterized in**:
having a list of unauthorized processes that might cause unauthorized copying/tampering of a content, and a list of interrupt processes that are executed with a higher priority than a content consumption;
determining whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, suppressing a start of its process.

92. A content consumption control method, **characterized in**:
having a list of unauthorized processes that might cause unauthorized copying/tampering of a content, and a list of interrupt processes that are executed with a higher priority than a content consumption;
determining whether the process that is going to be started/ended during the content consumption is equivalent to any of said two processes;
in a case of a start of said interrupt process, notifying a user that the interrupt process has been started; and
when the user inputs the effect that the interrupt process is executed with a higher priority than the content consumption, starting the interrupt process, interrupting the consumption of the content till the interrupt process is ended, and deleting data of the content for consumption.

93. The content consumption control method according to one of claim 91 and claim 92, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

94. A content consumption control method, **characterized in**:
filing a list of unauthorized processes that might cause unauthorized copying/tampering of a content, and a list of interrupt processes that are executed with a higher priority than a content consumption into a permission of a content consumption; and
distributing said permission to a content consumption terminal before reproducing the content; and that the content consumption terminal:
makes a reference to said permission, thereby to determine whether the process that is going to be started/ended during the content consumption is equivalent to any of said two processes;
notifies a user that the interrupt process has been started in a case of a start of said interrupt process, starts the interrupt process when the user inputs the effect that the interrupt process is executed with a higher priority than the content consumption, and interrupts the consumption of the content till the interrupt process is ended; and
in a case of said unauthorized process, suppresses a start of its process.

95. A content consumption control method, **characterized in**:
filing a list of unauthorized processes that might cause unauthorized copying/tampering of a content, and a list of interrupt processes that are executed with a higher priority than a content consumption into a permission of a content consumption; and
distributing said permission to a content consumption terminal before reproducing the content; and that the content consumption terminal:
makes a reference to said permission, thereby to determine whether the process that is going to be started/ended during the content consumption is equivalent to any of said two processes;
notifies a user that the interrupt process has been started in a case of a start of said interrupt process, starts the interrupt process when the user inputs the effect that the interrupt process is executed with a higher priority than the content consumption, and interrupts the consumption of the content till the interrupt process is ended; and
forcibly ends the consumption of the content to delete data of a non-encrypted content in a case of said unauthorized process.

96. The content consumption control method according to one of claim 94 and claim 95, **characterized in**, in a case where the content has been distributed with a limit to a consumption time set, or a limit to the number of times set, in which the number of times is measured on the assumption that the content has been reproduced one time in the case that a certain time has passed since a consumption start:
stopping a measurement of the consumption time at the time of starting said interrupt process; and
resuming the measurement of the consumption time at the time that said interrupt process is ended.

97. A content consumption control system having a list of interrupt processes having a higher priority than a content consumption, **characterized in** having the means for:
determining whether the process that is going to be started/ended during the content consumption is equivalent to said interrupt process;
preserving an amount of the content used so far;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
at the time that said interrupt process is ended, detecting the preserved content metered amount, and resuming the content consumption in line with a use control method of the content.

98. The content consumption control system according to claim 97, **characterized in**, in a case where said content use control method is a control method of a consumption time, or a number-of-times control method of measuring the number of times on the assumption that the content has been reproduced one time in the case that a certain time has passed since a consumption start, including means for stopping a measurement of the consumption time at the time of starting said interrupt process, and resuming the measurement of the consumption time at the time that said interrupt process is ended.

99. A content consumption control system, **characterized in that**:
a server has means for distributing a permission of a content consumption having a list of interrupt processes having a higher priority than a content consumption filed to a content consumption terminal before reproducing a content; and
the content consumption terminal has the means for:
making a reference to said permission, thereby to determine whether the process that is going to be started/ended during the content consumption is equivalent to said interrupt process; and
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended.

100. The content consumption control system according to claim 99, **characterized in that**, in a case where the content has been distributed with a limit to a consumption time set, or a limit to the number of times set, in which the number of times is measured on the assumption that the content has been reproduced one time in the case that a certain time has passed since a consumption start, said content consumption terminal has means for stopping a measurement of the consumption time at the time of starting said interrupt process, and resuming the measurement of the consumption time at the time that said interrupt process is ended.

101. A terminal, **characterized in** having the means for:
making a reference to a permission of a content consumption having a list of interrupt processes having a higher priority than a content consumption filed, thereby to determine whether the process that is going to be started/ended during the content consumption is equivalent to said interrupt process; and
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended.

102. The terminal according to claim 101, **characterized in**, in a case where the content has been distributed with a limit to a consumption time set, or a limit to the number of times set, in which the number of times is measured on the assumption that the content has been reproduced one time in the case that a certain time has passed since a consumption start, including means for stopping a measurement of the consumption time at the time of starting said interrupt process, and resuming the measurement of the consumption time at the time that said interrupt process is ended.

103. A content consumption control system, **characterized in** having:
a list of unauthorized processes that might cause unauthorized copying/tampering of a content;
a list of interrupt processes having a higher priority than a content consumption;
means for determining whether the process that is going to be started/ended during the content consumption is equivalent to any of said two processes;
means for, in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
means for, in a case of said unauthorized process, suppressing a start of its process.

104. A content consumption control system, **characterized in** having:
a list of unauthorized processes that might cause unauthorized copying/tampering of a content;
a list of interrupt processes having a higher priority than a content consumption;
means for determining whether the process that is going to be started/ended during the content consumption is equivalent to any of said two processes;
means for, in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
means for, in a case of said unauthorized process, forcibly ending the consumption of the content to delete data of a non-encrypted content.

105. The content consumption control system according to one of claim 103 and claim 104, **characterized in**, in a case where the content has been distributed with a limit to a consumption time set, or a limit to the number of times set, in which the number of times is measured on the assumption that the content has been reproduced one time in the case that a certain time has passed since a consumption start, having means for stopping a measurement of the consumption time at the time of starting said interrupt process, and resuming the measurement of the consumption time at the time that said interrupt process is ended.

106. A content consumption control system, **characterized in that**:
a server has means for distributing a permission of a content consumption having a list of unauthorized processes that might cause unauthorized copying/tampering of a content, and a list of interrupt processes having a higher priority than a content consumption filed to a content consumption terminal before reproducing the content; and
the content consumption terminal has the means for:
making a reference to said permission, thereby to determine whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, suppressing a start of its process.

107. A content consumption control system, **characterized in that**:
a server has means for distributing a permission of a content consumption having a list of unauthorized processes that might cause unauthorized copying/tampering of a content, and a list of interrupt processes having a higher priority than a content consumption filed to a content consumption terminal before reproducing the content; and
the content consumption terminal has the means for:
making a reference to said permission, thereby to determine whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, forcibly ending the consumption of the content to delete data of the content for consumption.

108. The content consumption control system according to one of claim 106 and claim 107, **characterized in that**, in a case where the content has been distributed with a limit to a consumption time set, or a limit to the number of times set, in which the number of times is measured on the assumption that the content has been reproduced one time in the case that a certain time has passed since a consumption start, said content consumption terminal has means for stopping a measurement of the consumption time at the time of starting said interrupt process, and resuming the measurement of the consumption time at the time that said interrupt process is ended.

109. A terminal, **characterized in** having the means for:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of where said process is said interrupt process that is started, notifying a user that the interrupt process has been started, starting the interrupt process when the user inputs the effect that the interrupt process is executed with a higher priority than the content consumption, and interrupting the consumption of the content till the interrupt process is ended; and
in a case where said process is said unauthorized process, suppressing a start of its process.

110. A terminal, **characterized in** having the means for:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, forcibly ending the consumption of the content to delete data of the content for consumption.

111. The terminal according to one of claim 109 and claim 110, **characterized in**, in a case where the content has been distributed with a limit to a consumption time set, or a limit to the number of times set, in which the number of times is measured on the assumption that the content has been reproduced one time in the case that a certain time has passed since a consumption start, having means for stopping a measurement of the consumption time at the time of starting said interrupt process, and resuming the measurement of the consumption time at the time that said interrupt process is ended.

112. A program having a list of interrupt processes having a higher priority than a content consumption, said program causing a content consumption terminal to execute the processes of:
determining whether the process that is going to be started/ended during the content consumption is equivalent to said interrupt process;
preserving an amount of the content used so far;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
at the time that said interrupt process is ended, detecting the preserved content metered amount, and resuming the content consumption in line with a use control method of the content.

113. The program according to claim 112 for, in a case where said content use control method is a control method of a consumption time, or a number-of-times control method of measuring the number of times on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

114. A program for causing a content consumption terminal to execute the processes of:
making a reference to a permission of a content consumption having a list of interrupt processes having a higher priority than a content consumption filed, thereby to determine whether the process that is going to be started/ended during the content consumption is equivalent to said interrupt process; and
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended.

115. The program according to claim 114 for, in a case where the content has been distributed with a limit to a consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

116. A program having a list of unauthorized processes that might cause unauthorized copying/tampering of a content, and a list of interrupt processes having a higher priority than a content consumption, said program causing a content consumption terminal to execute the processes of:
determining whether the process that is going to be started/ended during the content consumption is equivalent to any of said two processes;
in a case where said process is equivalent to said interrupt process that is stared, notifying a user that the interrupt process has been started, starting the interrupt process when the user inputs the effect that the interrupt process is executed with a higher priority than the content consumption, and interrupting the consumption of the content till the interrupt process is ended; and
in a case of said process is said unauthorized process, suppressing a start of its process.

117. A program having a list of unauthorized processes that might cause unauthorized copying/tampering of a content, and a list of interrupt processes having a higher priority than a content consumption, said program causing a content consumption terminal to execute the processes of:
determining whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, forcibly ending the consumption of the content to delete data of a non-encrypted content.

118. The program according to one of claim 116 and claim 117 for, in a case where the content has been distributed with a limit to a consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.

119. A program for causing a content consumption terminal to execute the processes of:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, suppressing a start of its process.

120. A program for causing a content consumption terminal to execute the processes of:
making a reference to a permission of a content consumption having a list of unauthorized processes that might cause unauthorized copying/tampering of a content, and a list of interrupt processes having a higher priority than a content consumption filed, thereby to determine whether the process that is going to be started/ended during the content consumption is equivalent to any of said two processes;
in a case of a start of said interrupt process, notifying a user that the interrupt process has been started, starting the interrupt process when the user inputs the effect that the interrupt process is executed with a higher priority than the content consumption, and interrupting the consumption of the content till the interrupt process is ended; and
in a case of said unauthorized process, forcibly ending the consumption of the content to delete data of a non-encrypted content.

121. The program according to one of claim 119 and claim 120 for, in a case where the content has been distributed with a limit to the consumption time set, or a limit to the number of times set, in which the number of times is measured on the assumption that the content has been reproduced one time in the case that a certain time has passed since a consumption start, causing the content consumption terminal to execute a process of stopping a measurement of the consumption time at the time of starting said interrupt process, and resuming the measurement of the consumption time at the time that said interrupt process is ended.
